# EUROPEAN PATENT APPLICATION

(11) **EP 4 661 495 A1**
(43) Date of publication of application: **10.12.2025**
(21) Application number: 23923684.7
(22) Date of filing: 22.09.2023
(51) Int. Cl.: H04W 36/00

(54) **COMMUNICATION METHOD AND RELATED APPARATUS**

(30) Priority: 24.02.2023 CN 202310212311
(71) Applicant: Huawei Technologies Co., Ltd., Shenzhen, Guangdong 518129 (CN)
(72) Inventor: CHEN, Yunman, Shenzhen, Guangdong 518129 (CN); ZHANG, Wen, Shenzhen, Guangdong 518129 (CN); SI, Xiaoshu, Shenzhen, Guangdong 518129 (CN)
(74) Representative: Isarpatent
(86) International application number: PCT/CN2023/120643
(87) International publication number: WO 2024/174519

(57) **Abstract**

Embodiments of this application disclose a communication method and a related apparatus. The method in embodiments of this application includes: A first access point AP receives first indication information from an access controller AC, where the first indication information indicates the first AP to delete a first aggregated session between the first AP and a first station STA. The first AP deletes the first aggregated session. The first AP sends second indication information to the AC, where the second indication information indicates that the first AP successfully deletes the first aggregated session. Therefore, the AC determines that the first aggregated session has been deleted, and the AC indicates to hand over the first STA to a second AP, so that after the first STA is handed over to the second AP, the first STA establishes an aggregated session with the second AP, and performs aggregated transmission, thereby avoiding service interruption or freezing of the first STA, and improving communication quality.

## Description

This application claims priority to Chinese Patent Application No. 202310212311.3, filed with the China National Intellectual Property Administration on February 24, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

To improve air interface transmission efficiency, aggregated transmission is performed between an access point (access point, AP) and a station (station, STA) in a wireless network. First, an aggregated session is established between the AP and the STA. Then, aggregated transmission is performed between the AP and the STA. For example, after receiving an aggregated frame of the STA, the AP may perform feedback in a form of a block acknowledgment (block acknowledgement, BA) frame.

To implement fast STA handover, a STA may access a plurality of APs in advance. For example, when the STA is handed over from an AP 1 to an AP 2, the STA does not need to re-establish a link to the AP 2, and the AP 2 may directly provide a communication service for the STA. However, no aggregated session is established between the AP 2 and the STA. As a result, aggregated transmission of the STA is interrupted. Consequently, service interruption or freezing of the STA occurs, and communication quality of the STA is affected.

### SUMMARY

This application provides a communication method and a related apparatus, for a first AP to delete a first aggregated session based on first indication information from an AC, so that after a first STA is handed over to a second AP, the first STA and the second AP establish an aggregated session, and perform aggregated transmission, thereby avoiding service interruption or freezing of the first STA due to a failure in aggregated transmission between the first STA and the second AP, and improving communication quality of the first STA.

A first aspect of this application provides a communication method, including:
A first AP receives first indication information from an access controller (access controller, AC). The first indication information indicates the first AP to delete a first aggregated session between the first AP and a first station (station, STA). The first AP deletes the first aggregated session. The first AP sends second indication information to the AC. The second indication information indicates that the first AP successfully deletes the first aggregated session.

In the foregoing technical solution, the first AP receives the first indication information from the AC, and deletes the first aggregated session based on the first indication information. Then, the first AP sends the second indication information to the AC, to indicate that the first aggregated session is successfully deleted. Therefore, the AC determines that the first aggregated session has been deleted, and the AC indicates to hand over the first STA to a second AP, so that after the first STA is handed over to the second AP, the first STA may establish an aggregated session with the second AP, and perform aggregated transmission, thereby avoiding service interruption or freezing of the first STA due to a failure in aggregated transmission between the first STA and the second AP, and improving communication quality of the first STA.

Based on the first aspect, in a possible implementation, after the first AP sends the second indication information to the AC, the method further includes: The first AP receives third indication information from the AC. The third indication information indicates that the first STA is to be handed over from the first AP to a second AP. In this implementation, after the AC receives the second indication information, the AC determines that the first aggregated session is successfully deleted. Therefore, the AC may indicate, by using the third indication information, that the first STA is to be handed over from the first AP to the second AP, so that after the first STA is handed over to the second AP, the first STA may establish an aggregated session with the second AP, and perform aggregated transmission, thereby avoiding service interruption or frame freezing of the first STA.

Based on the first aspect, in a possible implementation, the first aggregated session includes some or all aggregated sessions established between the first AP and the first STA. In this implementation, the AC may specify to delete some or all of the aggregated sessions between the first AP and the first STA. Therefore, the AC flexibly indicates the first AP to delete a corresponding aggregated session.

Based on the first aspect, in a possible implementation, that the first AP deletes the first aggregated session includes: The first AP sends a first request frame to the first STA. The first request frame is used to request to delete the first aggregated session, the first request frame includes first information and a TID corresponding to the first aggregated session, and the first information is used to indicate whether the first AP is a data transmitter or a data receiver of the first aggregated session. The first AP receives a first response frame from the first STA. The first response frame includes second information, the TID corresponding to the first aggregated session, and a reason code, the second information is used to indicate whether the first STA is a data transmitter or a data receiver of the first aggregated session, and the reason code is used to indicate a deletion status of deleting the first aggregated session by the first STA. In this implementation, the first AP and the first STA may delete the first aggregated session by using the first request frame and the first response frame. This ensures that the first aggregated session is deleted, so that the first STA and the second AP subsequently re-establish an aggregated session, and perform aggregated transmission, thereby improving communication quality.

Based on the first aspect, in a possible implementation, a value of a dialog token field in the first request frame is the same as a value of a dialog token field in the first response frame. This indicates that the first response frame is a response to the first request frame.

Based on the first aspect, in a possible implementation, the method further includes: The first AP releases an aggregated resource occupied by the first aggregated session. In this implementation, the first AP may release a corresponding aggregated resource, thereby avoiding resource occupation and avoiding a resource waste.

Based on the first aspect, in a possible implementation, the method further includes: The first AP sets an aggregation flag bit corresponding to the first aggregated session to false (False). This indicates that the first AP is not allowed to establish the first aggregated session with the first STA, or indicates that the first AP does not actively or cannot establish the first aggregated session with the first STA, thereby avoiding a problem that the second AP cannot establish an aggregated session with the first STA because the first AP re-establishes the first aggregated session with the first STA.

A second aspect of this application provides a communication method. The method includes:
An AC sends first indication information to a first AP. The first indication information indicates the first AP to delete a first aggregated session between the first AP and a first STA. The AC receives second indication information from the first AP. The second indication information indicates that the first AP successfully deletes the first aggregated session.

In the foregoing technical solution, the AC may indicate, by using the first indication information, the first AP to delete the first aggregated session. Then, the AC receives the second indication information from the first AP. Therefore, the AC controls the first STA to be handed over to the second AP, so that after the first STA is handed over to the second AP, the first STA may establish an aggregated session with the second AP, and perform aggregated transmission, thereby avoiding service interruption or freezing of the first STA due to a failure in aggregated transmission between the first STA and the second AP, and improving communication quality of the first STA.

Based on the second aspect, in a possible implementation, after the AC receives the second indication information from the first AP, the method further includes: The AC sends third indication information to the first AP and the second AP. The third indication information indicates that the first STA is to be handed over from the first AP to the second AP. In this implementation, after the AC receives the second indication information, the AC may indicate the first STA to be handed over to the second AP. Before the first STA is handed over to the second AP, the first AP deletes the first aggregated session based on the first indication information of the AC. Therefore, after the first STA is handed over to the second AP, the first STA may establish an aggregated session with the second AP, and perform aggregated transmission, thereby avoiding service interruption or freezing of the first STA due to a failure in aggregated transmission between the first STA and the second AP, and improving communication quality of the first STA.

Based on the second aspect, in a possible implementation, the first aggregated session includes some or all aggregated sessions established between the first AP and the first STA. In this implementation, the AC may specify to delete some or all of the aggregated sessions between the first AP and the first STA. Therefore, the AC flexibly indicates the first AP to delete a corresponding aggregated session.

A third aspect of this application provides a communication method, including:
A second AP receives third indication information from an AC. The third indication information indicates that a first STA is to be handed over from a first AP to the second AP. The second AP establishes an uplink aggregated session and/or a downlink aggregated session with the first STA.

In the foregoing technical solution, the second AP receives the third indication information, and the second AP may establish the uplink aggregated session and/or the downlink aggregated session with the first STA. In this way, after the first STA is handed over to the second AP, the first STA and the second AP establish an aggregated session, so that the first STA and the second AP perform aggregated transmission, thereby avoiding service interruption or freezing of the first STA due to a failure in aggregated transmission between the first STA and the second AP.

Based on the third aspect, in a possible implementation, after the second AP receives the third indication information from the AC, and before the second AP establishes the uplink aggregated session and/or the downlink aggregated session with the first STA, the method further includes: The second AP sets uplink aggregation flag bits and/or downlink aggregation flag bits corresponding to all TIDs between the second AP and the first STA to true (TRUE). This indicates that the second AP may normally establish an aggregated session with the first STA.

A fourth aspect of this application provides a communication method, including:
After establishment of a first aggregated session between a second AP and a first STA is completed, a first AP obtains an aggregation parameter. The aggregation parameter is an aggregation parameter used to establish the first aggregated session between the second AP and the first STA. The first AP establishes a second aggregated session with the first STA based on the aggregation parameter.

In the foregoing technical solution, after establishment of the first aggregated session between the second AP and the first STA is completed, the first AP obtains the aggregation parameter, and establishes the second aggregated session with the first STA based on the aggregation parameter. After establishment of the first aggregated session between the second AP and the first STA is completed, the first AP establishes an aggregated session with the first STA in advance. In this way, after the first STA is handed over to the first AP, the first AP and the first STA perform aggregated transmission, thereby avoiding service interruption or freezing of the first STA due to a failure in aggregated transmission between the first STA and the first AP, and improving communication quality of the first STA.

Based on the fourth aspect, in a possible implementation, that a first AP obtains an aggregation parameter includes: The first AP receives an aggregation request frame and an aggregation response frame from an AC. The aggregation request frame and the aggregation response frame are used to establish the first aggregated session between the second AP and the first STA, and the aggregation parameter is carried in the aggregation request frame and the aggregation response frame. Alternatively, the first AP receives the aggregation parameter carried in the aggregation request frame and the aggregation response frame from the AC. In this implementation, two possible implementations in which the first AP obtains the aggregation parameter are shown. Therefore, the first AP establishes the second aggregated session with the first STA in advance, so that after the first STA is handed over to the first AP, the first AP and the first STA perform aggregated transmission. Aggregated transmission is implemented between the first AP and the first STA, and communication quality is improved.

Based on the fourth aspect, in a possible implementation, the second aggregated session is an uplink aggregated session. That the first AP establishes a second aggregated session with the first STA based on the aggregation parameter includes: The first AP simulates receiving the aggregation request frame. The first AP simulates sending the aggregation response frame. The first AP establishes the second aggregated session. In this implementation, a possible implementation in which the first AP establishes an uplink aggregated session with the first STA based on the aggregation request frame and the aggregation response frame is shown. Therefore, the uplink aggregated session is established between the first AP and the first STA before handover of the first STA, so that after the first STA is handed over to the first AP, the first AP and the first STA perform downlink aggregated transmission.

Based on the fourth aspect, in a possible implementation, the second aggregated session is a downlink aggregated session. That the first AP establishes a second aggregated session with the first STA based on the aggregation parameter includes: The first AP simulates sending the aggregation request frame. The first AP simulates receiving the aggregation response frame. The first AP establishes the second aggregated session. In this implementation, a possible implementation in which the first AP establishes a downlink aggregated session with the first STA based on the aggregation request frame and the aggregation response frame is shown. Therefore, the second aggregated session is established between the first AP and the first STA before handover of the first STA, so that after the first STA is handed over to the first AP, the first AP and the first STA perform uplink aggregated transmission.

Based on the fourth aspect, in a possible implementation, after the first AP establishes the second aggregated session with the first STA based on the aggregation parameter, the method further includes: The first AP sends first indication information to the AC. The first indication information indicates that the second aggregated session between the first AP and the first STA is successfully established. In this implementation, after establishing the second aggregated session, the first AP may send the first indication information to the AC, so that the AC hands over the first STA to the first AP. In this way, after the first STA is handed over to the first AP, the first AP and the first STA perform aggregated transmission.

Based on the fourth aspect, in a possible implementation, the method further includes: The first AP receives second indication information from the AC. The second indication information indicates that the first STA is to be handed over from the second AP to the first AP. Therefore, the AC hands over the first STA to the first AP.

Based on the fourth aspect, in a possible implementation, after the first AP receives the second indication information from the AC, the method further includes: The first AP receives an uplink aggregated frame from the first STA. The uplink aggregated frame includes at least one subframe and a sequence number SN of each of the at least one subframe. The first AP sends a first block acknowledgment (Block ACK, BA) frame to the first STA. The first BA frame includes a starting sequence number (starting sequence number, SSN) field and a block acknowledgment bitmap field, the starting sequence number field is used to indicate a first SSN, the first SSN is determined by the first AP based on the sequence number SN of each of the at least one subframe, and the block acknowledgment bitmap field is used to indicate whether the first AP successfully receives the at least one subframe. In this implementation, a process of performing uplink aggregated transmission between the first AP and the first STA is shown. The first AP may determine the first SSN based on an SN respectively corresponding to the at least one subframe in the uplink aggregated frame, and determine the block acknowledgment bitmap field based on receiving of the at least one subframe. In this way, uplink aggregated transmission is normally performed between the first AP and the first STA.

Based on the fourth aspect, in a possible implementation, a value of the first SSN is an SN in the 1^{st} subframe in the uplink aggregated frame. Alternatively, a value of the first SSN is equal to a difference between an SN of a last subframe in the uplink aggregated frame and a first value, and the first value is equal to an aggregation window size corresponding to the first aggregated session minus 1. In this way, diversity of solutions is implemented, and the first AP adjusts an SSN in the first BA frame based on the SN corresponding to the at least one subframe, so that uplink aggregated transmission is normally performed between the first AP and the first STA.

Based on the fourth aspect, in a possible implementation, after the first AP receives the second indication information from the AC, the method further includes: The first AP sends a BA request frame to the first STA. The BA request frame is used to request the first STA to adjust an SSN in a BA frame of the first STA, the BA request frame includes a second SSN, and the second SSN is determined by the first AP based on an SN corresponding to at least one subframe to be sent by the first AP to the first STA. The first AP receives a second BA frame from the first STA. The second BA frame includes the second SSN. In this implementation, an implementation in which the first AP requests the first STA to adjust an SSN in the second BA frame is shown. In this way, downlink aggregated transmission is normally performed between the first AP and the first STA.

Based on the fourth aspect, in a possible implementation, after the first AP receives the second indication information from the AC, the method further includes: The first AP sends a downlink aggregated frame to the first STA. The downlink aggregated frame includes at least one subframe and an SN of each of the at least one subframe. The first AP receives a third BA frame from the first STA. The third BA frame includes a starting sequence number field and a block acknowledgment bitmap field, the starting sequence number field is used to indicate a second SSN, the second SSN is determined by the first STA based on the SN of each of the at least one subframe, and the block acknowledgment bitmap field is used to indicate whether the first STA successfully receives the at least one subframe. In this implementation, an implementation in which the first AP requests the first STA to adjust an SSN in the third BA frame is shown. In this way, downlink aggregated transmission is normally performed between the first AP and the first STA.

Based on the fourth aspect, in a possible implementation, the first AP and the AC are a same device. Alternatively, the second AP and the AC are a same device.

A fifth aspect of this application provides a communication method, including:
An AC receives an aggregation parameter from a second AP. The aggregation parameter is an aggregation parameter used to establish a first aggregated session between the second AP and a first STA. The AC sends the aggregation parameter to a first AP. The aggregation parameter is used by the first AP to establish a second aggregated session with the first STA.

In the foregoing technical solution, the AC may receive the aggregation parameter from the second AP, and send the aggregation parameter to the first AP. In this way, the first AP establishes an aggregated session with the first STA in advance, so that after the first STA is handed over to the first AP, the first AP and the first STA perform aggregated transmission, thereby avoiding service interruption or freezing of the first STA due to a failure in aggregated transmission between the first STA and the first AP, and improving communication quality of the first STA.

Based on the fifth aspect, in a possible implementation, that an AC receives an aggregation parameter from a second AP includes: The AC receives an aggregation request frame and an aggregation response frame from the second AP. The aggregation request frame and the aggregation response frame are used to establish the first aggregated session between the second AP and the first STA, and the aggregation parameter is carried in the aggregation request frame and the aggregation response frame. That the AC sends the aggregation parameter to a first AP includes: The AC sends the aggregation request frame and the aggregation response frame to the first AP. Alternatively, the AC sends, to the first AP, the aggregation parameter carried in the aggregation request frame and the aggregation response frame. In this implementation, the AC may receive the aggregation request frame and the aggregation response frame of the second AP, and then send, to the first AP, the aggregation request frame and the aggregation response frame, or the aggregation parameter carried in the aggregation request frame and the aggregation response frame, so that the first AP obtains the aggregation parameter. This facilitates implementation of solutions.

Based on the fifth aspect, in a possible implementation, after the AC sends the aggregation parameter to the first AP, the method further includes: The AC receives first indication information from the first AP. The first indication information indicates that the second aggregated session between the first AP and the first STA is successfully established. In this implementation, the AC receives the first indication information from the first AP. Therefore, the AC determines that the second aggregated session is successfully established, so that the AC hands over the first STA to the first AP at a proper time, thereby avoiding a problem that the first STA cannot perform aggregated transmission with the first AP after the first STA is handed over to the first AP.

Based on the fifth aspect, in a possible implementation, the method further includes:
The AC sends second indication information to the first AP and the second AP. The second indication information indicates that the first STA is to be handed over from the second AP to the first AP. In this way, a proper AP is selected for the first STA to perform a communication service. Further, because the first STA and the first AP have established an aggregated session in advance, after the first STA is handed over to the first AP, the first STA may perform aggregated transmission with the first AP.

A sixth aspect of this application provides a communication method, including:
A first AP receives first indication information from an AC. The first indication information indicates the first AP to delete a first aggregated session between a second AP and a first STA. The first AP sends a first request frame to the first STA. The first request frame is used to request the first STA to delete the first aggregated session. The first AP receives a first response frame or acknowledgment information from the first STA. The first response frame is used to indicate that the first STA successfully deletes the first aggregated session, and the acknowledgment information is used to indicate that the first STA successfully receives the first request frame.

In the foregoing technical solution, the first AP deletes the first aggregated session based on the first indication information by using the first request frame and the first response frame or by using the first request frame and the acknowledgment information. In this way, before the first STA is handed over to the first AP, the first STA deletes the first aggregated session, so that after the first STA is handed over to the first AP, the first STA may establish an aggregated session with the first AP, and perform aggregated transmission with the first AP, thereby avoiding service interruption or freezing of the first STA due to a failure in aggregated transmission between the first STA and the first AP, and improving communication quality of the first STA.

Based on the sixth aspect, in a possible implementation, the first request frame includes first information and a traffic identifier (traffic identifier, TID) corresponding to the first aggregated session, and the first information is used to indicate whether the second AP is a data transmitter or a data receiver of the first aggregated session. The first response frame includes second information, the TID corresponding to the first aggregated session, and a reason code, the second information is used to indicate whether the first STA is a data transmitter or a data receiver of the first aggregated session, and the reason code is used to indicate a deletion status of deleting the first aggregated session by the first STA.

In this implementation, content respectively included in the first request frame and the first response frame is shown. This helps ensure that the first AP determines a deletion status of the first aggregated session, thereby ensuring that the first aggregated session is successfully deleted. In addition, this helps regulate frame structures respectively corresponding to the first request frame and the first response frame, and facilitates standardization.

Based on the sixth aspect, in a possible implementation, after the first AP receives the first response frame or the acknowledgment information from the first STA, the method further includes: The first AP establishes an uplink aggregated session and/or a downlink aggregated session with the first STA. In this implementation, after the first aggregated session between the second AP and the first STA is successfully deleted, the first AP and the first STA may establish an aggregated session, so that the first AP and the first STA perform aggregated transmission, thereby improving communication efficiency and communication quality.

Based on the sixth aspect, in a possible implementation, before the first AP establishes the uplink aggregated session and/or the downlink aggregated session with the first STA, the method further includes: The first AP sets uplink aggregation flag bits and/or downlink aggregation flag bits corresponding to all TIDs between the first AP and the first STA to true. This indicates that the first AP may normally establish an aggregated session with the first STA.

Based on the sixth aspect, in a possible implementation, before the first AP receives the first indication information from the AC, the method further includes: The first AP receives third indication information from the AC. The third indication information indicates that the first STA is to be handed over from the second AP to the first AP. In this way, a proper AP is selected for the first STA to provide a communication service. In the foregoing implementation, aggregated transmission may be performed between the first AP and the first STA.

A seventh aspect of this application provides a communication method, including:
An AC sends first indication information to a first AP. The first indication information indicates the first AP to delete a first aggregated session between a second AP and a first STA. The AC sends second indication information to the second AP. The second indication information indicates the second AP to release an aggregated resource occupied by the first aggregated session.

In the foregoing technical solution, the AC may indicate, by using the first indication information, the first AP to delete the first aggregated session. Then, the AC indicates, by using the second indication information, the second AP to release the aggregated resource occupied by the first aggregated session. Therefore, the AC controls the first STA to be handed over to the first AP, so that after the first STA is handed over to the first AP, the first STA may establish an aggregated session with the first AP, and perform aggregated transmission, thereby avoiding service interruption or freezing of the first STA due to a failure in aggregated transmission between the first STA and the first AP, and improving communication quality of the first STA.

Based on the seventh aspect, in a possible implementation, before the AC sends the first indication information to the first AP, the method further includes: The AC sends third indication information to the first AP and the second AP. The third indication information indicates that the first STA is to be handed over from the second AP to the first AP. In this way, a proper AP is selected for the first STA to provide a communication service. In the foregoing implementation, aggregated transmission may be performed between the first AP and the first STA.

An eighth aspect of this application provides a communication method, including:
A second AP receives second indication information from an AC. The second indication information indicates the second AP to release an aggregated resource occupied by a first aggregated session between the second AP and a first STA. The second AP releases the aggregated resource occupied by the first aggregated session.

In the foregoing technical solution, the second AP receives the second indication information from the AC. Then, the second AP releases the aggregated resource occupied by the first aggregated session. In this way, after the first STA is handed over to the first AP, the first STA may establish an aggregated session with the first AP, so that the first STA and the first AP perform aggregated transmission, thereby avoiding service interruption or freezing of the first STA due to a failure in aggregated transmission between the first STA and the first AP.

Based on the eighth aspect, in a possible implementation, before the second AP receives the second indication information from the AC, the method further includes: The second AP receives third indication information from the AC. The third indication information indicates that the first STA is to be handed over from the second AP to the first AP. In this way, the first STA is handed over to the first AP, and a proper AP is selected for the first STA to perform a communication service. In addition, because the aggregated session between the second AP and the first STA has been deleted, after the first STA is handed over to the first AP, the first STA and the first AP may establish an aggregated session, and perform aggregated transmission, thereby avoiding service interruption or frame freezing of the first STA.

Based on the eighth aspect, in a possible implementation, after the second AP receives the third indication information from the AC, the method further includes: The second AP does not establish an aggregated session with the first STA.

A ninth aspect of this application provides a communication apparatus, including:
a receiving module, configured to receive first indication information from an AC, where the first indication information indicates the communication apparatus to delete a first aggregated session between the communication apparatus and a first STA;
a processing module, configured to delete the first aggregated session; and
a sending module, configured to send second indication information to the AC, where the second indication information indicates that the communication apparatus successfully deletes the first aggregated session.

Based on the ninth aspect, in a possible implementation, the receiving module is further configured to:
receive third indication information from the AC. The third indication information indicates that the first STA is to be handed over from the communication apparatus to a second AP.

Based on the ninth aspect, in a possible implementation, the first aggregated session includes some or all aggregated sessions established between the communication apparatus and the first STA.

Based on the ninth aspect, in a possible implementation, the processing module is specifically configured to:
send a first request frame to the first STA, where the first request frame is used to request to delete the first aggregated session, the first request frame includes first information and a TID corresponding to the first aggregated session, and the first information is used to indicate whether the communication apparatus is a data transmitter or a data receiver of the first aggregated session; and receive a first response frame from the first STA, where the first response frame includes second information, the TID corresponding to the first aggregated session, and a reason code, the second information is used to indicate whether the first STA is a data transmitter or a data receiver of the first aggregated session, and the reason code is used to indicate a deletion status of deleting the first aggregated session by the first STA.

Based on the ninth aspect, in a possible implementation, a value of a dialog token field in the first request frame is the same as a value of a dialog token field in the first response frame.

Based on the ninth aspect, in a possible implementation, the processing module is further configured to:
release an aggregated resource occupied by the first aggregated session.

Based on the ninth aspect, in a possible implementation, the processing module is further configured to:
set an aggregation flag bit corresponding to the first aggregated session to false.

A tenth aspect of this application provides a communication apparatus, including:
a sending module, configured to send first indication information to a first AP, where the first indication information indicates the first AP to delete a first aggregated session between the first AP and a first STA; and
a receiving module, configured to receive second indication information from the first AP, where the second indication information indicates that the first AP successfully deletes the first aggregated session.

Based on the tenth aspect, in a possible implementation, the sending module is further configured to: send third indication information to the first AP and a second AP. The third indication information indicates that the first STA is to be handed over from the first AP to the second AP.

Based on the tenth aspect, in a possible implementation, the first aggregated session includes some or all aggregated sessions established between the first AP and the first STA.

An eleventh aspect of this application provides a communication apparatus, including:
a receiving module, configured to receive third indication information from an AC, where the third indication information indicates that a first STA is to be handed over from a first AP to the communication apparatus; and
a processing module, configured to establish an uplink aggregated session and/or a downlink aggregated session with the first STA.

Based on the eleventh aspect, in a possible implementation, the processing module is further configured to: set uplink aggregation flag bits and/or downlink aggregation flag bits corresponding to all TIDs between the communication apparatus and the first STA to true.

A twelfth aspect of this application provides a communication apparatus, including:
a receiving module, configured to: after establishment of a first aggregated session between a second AP and a first STA is completed, obtain an aggregation parameter, where the aggregation parameter is an aggregation parameter used to establish the first aggregated session between the second AP and the first STA; and
a processing module, configured to establish a second aggregated session with the first STA based on the aggregation parameter.

Based on the twelfth aspect, in a possible implementation, the receiving module is specifically configured to: receive an aggregation request frame and an aggregation response frame from the AC, where the aggregation request frame and the aggregation response frame are used to establish the first aggregated session between the second AP and the first STA, and the aggregation parameter is carried in the aggregation request frame and the aggregation response frame; or receive the aggregation parameter carried in the aggregation request frame and the aggregation response frame from the AC.

Based on the twelfth aspect, in a possible implementation, the second aggregated session is an uplink aggregated session. The processing module is specifically configured to: simulate receiving the aggregation request frame; simulate sending the aggregation response frame; and establish the second aggregated session.

Based on the twelfth aspect, in a possible implementation, the second aggregated session is a downlink aggregated session. The processing module is specifically configured to: simulate sending the aggregation request frame; simulate receiving the aggregation response frame; and establish the second aggregated session.

Based on the twelfth aspect, in a possible implementation, the communication apparatus further includes a sending module.

The sending module is configured to send first indication information to the AC. The first indication information indicates that the second aggregated session between the communication apparatus and the first STA is successfully established.

Based on the twelfth aspect, in a possible implementation, the receiving module is configured to receive second indication information from the AC. The second indication information indicates that the first STA is to be handed over from the second AP to the communication apparatus.

Based on the twelfth aspect, in a possible implementation, the receiving module is further configured to:
receive an uplink aggregated frame from the first STA. The uplink aggregated frame includes at least one subframe and a sequence number SN of each of the at least one subframe.

The communication apparatus further includes a sending module.

The sending module is configured to send a first BA frame to the first STA. The first BA frame includes a starting sequence number field and a block acknowledgment bitmap field, the starting sequence number field is used to indicate a first starting sequence number SSN, the first SSN is determined by the communication apparatus based on the sequence number SN of each of the at least one subframe, and the block acknowledgment bitmap field is used to indicate whether the communication apparatus successfully receives the at least one subframe.

Based on the twelfth aspect, in a possible implementation, a value of the first SSN is an SN in the 1^{st} subframe in the uplink aggregated frame. Alternatively, a value of the first SSN is equal to a difference between an SN of a last subframe in the uplink aggregated frame and a first value, and the first value is equal to an aggregation window size corresponding to the first aggregated session minus 1.

Based on the twelfth aspect, in a possible implementation, the sending module is further configured to:
send a BA request frame to the first STA. The BA request frame is used to request the first STA to adjust an SSN in a BA frame of the first STA, the BA request frame includes a second SSN, and the second SSN is determined by the communication apparatus based on an SN corresponding to at least one subframe to be sent by the communication apparatus to the first STA.

The receiving module is further configured to:
receive a second BA frame from the first STA. The second BA frame includes the second SSN.

Based on the twelfth aspect, in a possible implementation, the communication apparatus further includes a sending module.

The sending module is configured to send a downlink aggregated frame to the first STA. The downlink aggregated frame includes at least one subframe and an SN of each of the at least one subframe.

The receiving module is further configured to:
receive a third BA frame from the first STA. The third BA frame includes a starting sequence number field and a block acknowledgment bitmap field, the starting sequence number field is used to indicate a second SSN, the second SSN is determined by the first STA based on the SN of each of the at least one subframe, and the block acknowledgment bitmap field is used to indicate whether the first STA successfully receives the at least one subframe.

Based on the twelfth aspect, in a possible implementation, the communication apparatus and the AC are a same device. Alternatively, the second AP and the AC are a same device.

A thirteenth aspect of this application provides a communication apparatus, including:
a receiving module, configured to receive an aggregation parameter from a second AP, where the aggregation parameter is an aggregation parameter used to establish a first aggregated session between the second AP and a first STA; and
a sending module, configured to send the aggregation parameter to a first AP, where the aggregation parameter is used by the first AP to establish a second aggregated session with the first STA.

Based on the thirteenth aspect, in a possible implementation, the receiving module is specifically configured to:
receive an aggregation request frame and an aggregation response frame from the second AP. The aggregation request frame and the aggregation response frame are used to establish the first aggregated session between the second AP and the first STA, and the aggregation parameter is carried in the aggregation request frame and the aggregation response frame.

The sending module is specifically configured to:
send the aggregation request frame and the aggregation response frame to the first AP; or send, to the first AP, the aggregation parameter carried in the aggregation request frame and the aggregation response frame.

Based on the thirteenth aspect, in a possible implementation, the receiving module is further configured to:
receive first indication information from the first AP. The first indication information indicates that the second aggregated session between the first AP and the first STA is successfully established.

Based on the thirteenth aspect, in a possible implementation, the sending module is further configured to:
send second indication information to the first AP and the second AP. The second indication information indicates that the first STA is to be handed over from the second AP to the first AP.

A fourteenth aspect of this application provides a communication apparatus, including:
a receiving module, configured to receive first indication information from an AC, where the first indication information indicates the communication apparatus to delete a first aggregated session between a second AP and a first STA; and
a sending module, configured to send a first request frame to the first STA, where the first request frame is used to request the first STA to delete the first aggregated session; and
the receiving module is further configured to receive a first response frame or acknowledgment information from the first STA, where the first response frame is used to indicate that the first STA successfully deletes the first aggregated session, and the acknowledgment information is used to indicate that the first STA successfully receives the first request frame.

Based on the fourteenth aspect, in a possible implementation, the first request frame includes first information and a TID corresponding to the first aggregated session, and the first information is used to indicate whether the second AP is a data transmitter or a data receiver of the first aggregated session. The first response frame includes second information, the TID corresponding to the first aggregated session, and a reason code, the second information is used to indicate whether the first STA is a data transmitter or a data receiver of the first aggregated session, and the reason code is used to indicate a deletion status of deleting the first aggregated session by the first STA.

Based on the fourteenth aspect, in a possible implementation, the communication apparatus further includes a processing module.

The processing module is configured to establish an uplink aggregated session and/or a downlink aggregated session with the first STA.

Based on the fourteenth aspect, in a possible implementation, the communication apparatus further includes a processing module.

The processing module is configured to set uplink aggregation flag bits and/or downlink aggregation flag bits corresponding to all TIDs between the communication apparatus and the first STA to true.

Based on the fourteenth aspect, in a possible implementation, the receiving module is further configured to:
receive third indication information from the AC. The third indication information indicates that the first STA is to be handed over from the second AP to the communication apparatus.

A fifteenth aspect of this application provides a communication apparatus, including:
a sending module, configured to: send first indication information to a first AP, where the first indication information indicates the first AP to delete a first aggregated session between a second AP and a first STA; and send second indication information to the second AP, where the second indication information indicates the second AP to release an aggregated resource occupied by the first aggregated session.

Based on the fifteenth aspect, in a possible implementation, the sending module is further configured to: send third indication information to the first AP and the second AP. The third indication information indicates that the first STA is to be handed over from the second AP to the first AP.

A sixteenth aspect of this application provides a communication apparatus, including:
a receiving module, configured to receive second indication information from an AC, where the second indication information indicates the communication apparatus to release an aggregated resource occupied by a first aggregated session between the communication apparatus and a first STA; and
a processing module, configured to release the aggregated resource occupied by the first aggregated session.

Based on the sixteenth aspect, in a possible implementation, the receiving module is further configured to:
receive third indication information from the AC. The third indication information indicates that the first STA is to be handed over from the communication apparatus to the first AP.

Based on the sixteenth aspect, in a possible implementation, the processing module is further configured to not establish an aggregated session with the first STA.

A seventeenth aspect of this application provides a communication apparatus. The communication apparatus includes a processor. The processor is configured to invoke a computer program or computer instructions in a memory, to enable the processor to implement any implementation of any one of the first aspect to the eighth aspect.

Optionally, the communication apparatus further includes a transceiver, and the processor is configured to control the transceiver to receive and send signals.

An eighteenth aspect of this application provides a computer program product including instructions. When the computer program product runs on a computer, the computer is enabled to perform any implementation of any one of the first aspect to the eighth aspect.

A nineteenth aspect of this application provides a computer-readable storage medium, including computer instructions. When the computer instructions are run on a computer, any implementation of any one of the first aspect to the eighth aspect is performed.

A twentieth aspect of this application provides a chip apparatus, including a processor, configured to invoke a computer program or computer instructions in a memory, to enable the processor to perform any implementation of any one of the first aspect to the eighth aspect.

Optionally, the processor is coupled to the memory through an interface.

A twenty-first aspect of this application provides a communication system. The communication system includes the first AP shown in the first aspect, the AC shown in the second aspect, and the second AP shown in the third aspect. Alternatively, the communication system includes the first AP shown in the fourth aspect and the AC shown in the fifth aspect. Alternatively, the communication system includes the first AP shown in the sixth aspect, the AC shown in the seventh aspect, and the second AP shown in the eighth aspect.

### BRIEF DESCRIPTION OF DRAWINGS

FIG. 1 is a schematic diagram of a structure of a communication system according to an embodiment of this application;
FIG. 2A is a schematic flowchart of an aggregated session establishment process, an aggregated transmission process, and an aggregated session deletion process according to an embodiment of this application;
FIG. 2B is a schematic diagram of a frame structure of an add block acknowledgment (Add Block ACK, ADDBA) request frame according to an embodiment of this application;
FIG. 2C is a schematic diagram of a frame structure of an ADDBA response frame according to an embodiment of this application;
FIG. 2D is a schematic diagram of a structure of a BA frame according to an embodiment of this application;
FIG. 2E is a schematic diagram of a structure of a delete BA frame according to an embodiment of this application;
FIG. 3 is a schematic diagram of a scenario of a communication method according to an embodiment of this application;
FIG. 4 is a schematic diagram of a first embodiment of a communication method according to an embodiment of this application;
FIG. 5A is a schematic diagram of a second embodiment of a communication method according to an embodiment of this application;
FIG. 5B is a schematic diagram of a structure of a first response frame according to an embodiment of this application;
FIG. 6A and FIG. 6B are a schematic diagram of a third embodiment of a communication method according to an embodiment of this application;
FIG. 7 is a schematic diagram of a fourth embodiment of a communication method according to an embodiment of this application;
FIG. 8 is a schematic diagram of a fifth embodiment of a communication method according to an embodiment of this application;
FIG. 9 is a schematic diagram of a first structure of a communication apparatus according to an embodiment of this application;
FIG. 10 is a schematic diagram of a second structure of a communication apparatus according to an embodiment of this application;
FIG. 11 is a schematic diagram of a third structure of a communication apparatus according to an embodiment of this application;
FIG. 12 is a schematic diagram of a fourth structure of a communication apparatus according to an embodiment of this application; and
FIG. 13 is a schematic diagram of a fifth structure of a communication apparatus according to an embodiment of this application.

### DESCRIPTION OF EMBODIMENTS

This application provides a communication method and a related apparatus, for a first AP to delete a first aggregated session, so that after a first STA is handed over to a second AP, the first STA and the second AP establish an aggregated session, and perform aggregated transmission, thereby avoiding service interruption or freezing of the first STA due to a failure in aggregated transmission between the first STA and the second AP, and improving communication quality of the first STA.

The following clearly and completely describes technical solutions in embodiments of this application with reference to accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but not limited to", unless otherwise specifically emphasized in another manner.

In descriptions of this application, unless otherwise specified, "/" means "or". For example, A/B may indicate A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. The expression "at least one of the following items" or a similar expression means any combination of these items, including a single item or any combination of a plurality of items. For example, at least one of a, b, or c may represent a, b, c, a and b, a and c, b and c, or a, b, and c, where a, b, and c each may be singular or plural.

The technical solutions provided in this application may be applied to a wireless local area network (wireless local area network, WLAN) scenario. For example, the technical solutions provided in this application may be applied to an IEEE 802.11 system standard, such as an 802.11be standard or a next-generation standard. A network node that may be included in the WLAN is a station (station, STA), and the station includes an AP and a non-AP STA. In the following, an access point type station is referred to as an AP, and a non-access point type station is referred to as a STA.

Although embodiments of this application are mainly described by using an example in which a WLAN network is deployed, especially a network to which the IEEE 802.11 system standard is applied, persons skilled in the art easily understands that various aspects of this application may be extended to other networks that use various standards or protocols, for example, Bluetooth (BLUETOOTH), high-performance radio local area network (high-performance radio LAN, HIPERLAN) (a wireless standard similar to the IEEE 802.11 standard, mainly used in Europe), a wide area network (wide area network, WAN), a personal area network (personal area network, PAN), or other networks currently known or developed in the future. Therefore, various aspects provided in this application may be applied to any appropriate wireless network regardless of coverage and wireless access protocols during use.

Embodiments of this application may be further applied to a wireless local area network system, for example, an internet of things (internet of things, IoT) or vehicle-to-everything (Vehicle-to-X, V2X) network. Certainly, embodiments of this application may be further applied to other possible communication systems, for example, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for description, and communication systems applicable to this application are not limited thereto. This is stated herein once for all, and is not repeated below.

A wireless communication system to which this application is applicable includes an AC, an AP, and a STA. The AC manages and controls the AP. Optionally, the AC is integrated into the AP. The AP is configured to provide a communication service for the STA.

The AP is an access point for a mobile user to access a wired network, and is mainly deployed in a home, inside a building, or inside a campus, with a typical coverage radius of tens of meters to hundreds of meters. Certainly, the AP may alternatively be deployed outdoors. The AP is equivalent to a bridge that connects the wired network and a wireless network. A main function of the AP is to connect wireless network clients, and then connect the wireless network to the Ethernet. Specifically, the AP is a communication device with a Wi-Fi chip, such as a base station, a router, a gateway, a repeater, a communication server, a switch, or a bridge. The base station may include a macro base station, a micro base station, a relay station, and the like in various forms. In addition, further, optionally, the AP may be a device that supports a plurality of WLAN standards such as 802.11be, 802.11ac, 802.11n, 802.11g, 802.11b, and 802.11a, or may be an access point type station applicable to a future generation of Wi-Fi standards.

The STA may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, an in-vehicle communications device supporting a Wi-Fi communication function, or a computer supporting a Wi-Fi communication function. Specifically, the STA may be a terminal device or a network device with a wireless fidelity chip. Optionally, the station may support an 802.11ax standard. Further, optionally, the station supports a plurality of WLAN standards such as 802.11be, 802.11ac, 802.11n, 802.11g, 802.11b, and 802.11a, or may be a non-access point type station applicable to a future generation of Wi-Fi standards.

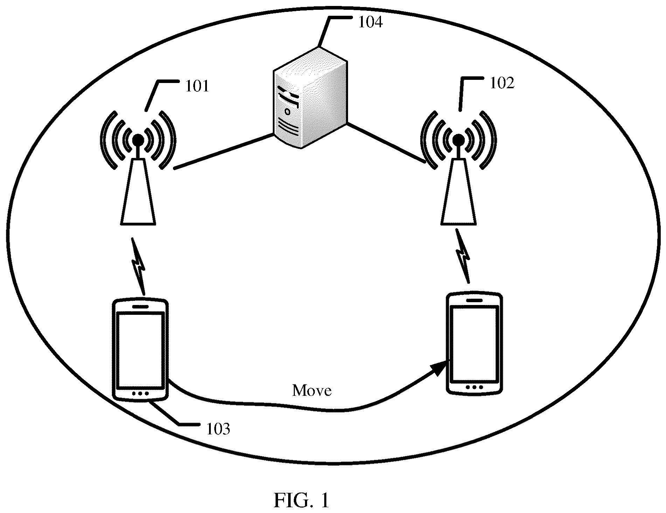

FIG. 1 is a schematic diagram of a structure of a communication system according to an embodiment of this application. Refer to FIG. 1. The communication system includes an AP 101, an AP 102, a STA 103, and an AC 104. The STA 103 may access the AP 101 and the AP 102. The STA 103 establishes an aggregated session with the AP 101, and performs aggregated transmission with the AP 101. The AC 104 is configured to indicate the STA 103 to be handed over from the AP 101 to the AP 102. After the STA 103 is handed over from the AP 101 to the AP 102, the AP 101 and the AP 102 may implement aggregated transmission between the STA 103 and the AP 102 by performing a technical solution in this application, to avoid service interruption or frame freezing of the STA 103.

Optionally, the AC 104 may be an independent device, or may be integrated into the AP 101 or the AP 102. This is not specifically limited in this application.

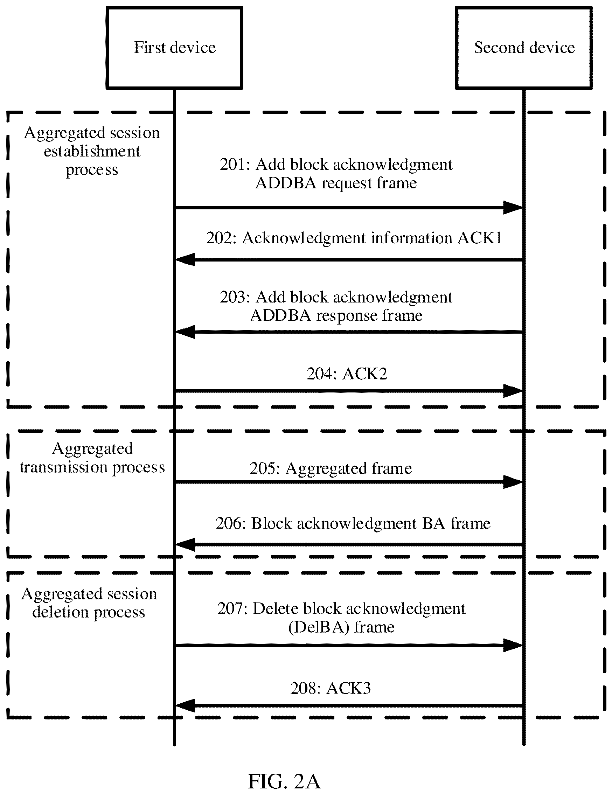

The following describes an aggregated session establishment process, an aggregated transmission process, and an aggregated session deletion process with reference to FIG. 2A.

FIG. 2A is a schematic flowchart of an aggregated session establishment process, an aggregated transmission process, and an aggregated session deletion process according to an embodiment of this application. Refer to FIG. 2A. The processes specifically include as follows:
201: A first device sends an ADDBA request frame to a second device. Correspondingly, the second device receives the ADDBA request frame from the first device.

The ADDBA request frame is used to request to establish an aggregated session.

Optionally, the first device is an AP, and the second device is a STA. Alternatively, the first device is a STA, and the second device is an AP.

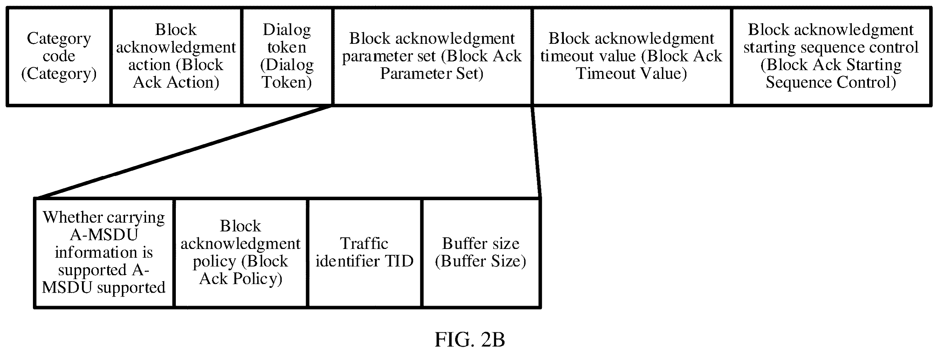

The following describes a possible frame structure of the ADDBA request frame with reference to FIG. 2B.

FIG. 2B is a schematic diagram of a frame structure of an ADDBA request frame according to an embodiment of this application. The following describes, with reference to Table 1, functions of fields in the ADDBA request frame shown in FIG. 2B.

**Table 1**

| Category (Category) | BA frame |
|---|---|
| BA action (Block ack action) | ADDBA request frame |
| Dialog token (Dialog token) | Token count |
| BA parameter set (Block ack parameter set) | Whether carrying aggregate media access control service data unit (Aggregation MAC Service Data Unit, A-MSDU) information is supported (A-msdu supported): being set to 1 indicates that the information can be carried, and being set to 0 indicates that the information cannot be carried |
| | Block acknowledgment policy (Block ack policy): being set to 1 indicates to reply with a BA frame immediately, and being set to 0 indicates to delay replying with a BA frame. |
| | Traffic identifier (traffic identity, TID): identifier of a service type |
| | Buffer size (Buffer size): indicating an aggregation window size, that is, a quantity of subframes included in an aggregated frame |
| Block acknowledgment timeout value (Block ack timeout value) | The timeout value indicates a time period, if there is no frame exchange within the time period, the aggregated session is terminated, and if the value is set to 0, the timeout operation is forbidden |
| Block acknowledgment starting sequence control (Block ack starting sequence control) | Fragment number (Fragment number): set to 0 |
| | Starting sequence number (Starting sequence number): indicating an SN of the 1^{st} subframe in the aggregated frame |

It should be noted that optionally, an aggregated session may be established between the AP and the STA by using a TID as a granularity. For example, for each TID, a corresponding uplink aggregated session and/or downlink aggregated session may be established between the AP and the STA. For different TIDs, different uplink aggregated sessions and/or downlink aggregated sessions may be established between the AP and the STA.

202: The second device sends an ACK1 to the first device. Correspondingly, the first device receives the ACK1 from the second device.

The ACK1 is used to indicate that the second device successfully receives the ADDBA request frame.

203: The second device sends an ADDBA response frame to the first device. Correspondingly, the first device receives the ADDBA response frame from the second device.

The ADDBA response frame is a response to the ADDBA request frame.

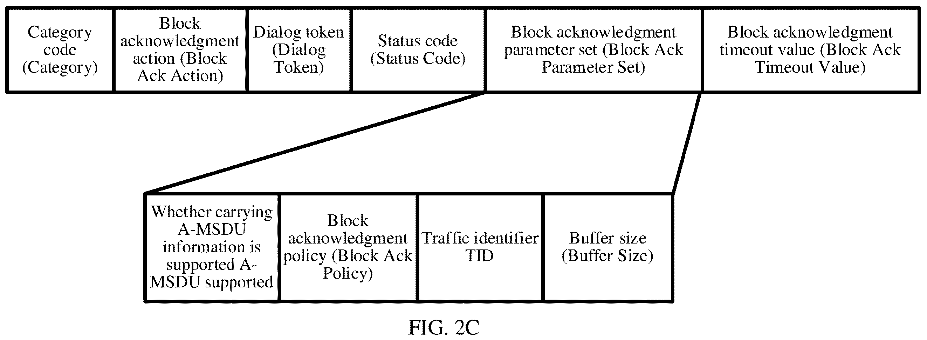

The following describes a schematic diagram of a possible frame structure of the ADDBA response frame with reference to FIG. 2C. The following describes, with reference to Table 2, functions of fields in the ADDBA response frame shown in FIG. 2C.

**Table 2**

| Category (Category) | BA frame |
|---|---|
| BA action (Block ack action) | ADDBA response frame |
| Dialog token (Dialog token) | Token count |
| Status code (Status Code) | Indicate a success or a failure in requesting aggregation, where being set to 0 indicates a success, being set to another value indicates a failure, and each value corresponds to a failure reason |
| Block acknowledgment parameter set (Block ack parameter set) | Similar to the block acknowledgment parameter set of the first ADDBA frame, and refer to related descriptions of Table 1 |
| Block acknowledgment timeout value (Block ack timeout value) | The value indicates a time period, if there is no frame exchange within the time period, the aggregated session is terminated, and if the value is set to 0, the timeout operation is forbidden |

It should be noted that, a value of the dialog token field in the ADDBA request frame is the same as a value of the dialog token field in the ADDBA response frame. This indicates that the ADDBA response frame is a response to the ADDBA request frame.

204: The first device sends an ACK2 to the second device.

The ACK2 is used to indicate that the first device successfully receives the ADDBA response frame.

It should be noted that, if the first device is an AP, and the second device is a STA, a downlink aggregated session is established between the first device and the second device. If the first device is a STA, and the second device is an AP, an uplink aggregated session is established between the first device and the second device.

If the aggregated session between the first device and the second device is successfully established, aggregated transmission may be performed between the first device and the second device. For details, refer to related descriptions of step 205 and step 206.

205: The first device sends an aggregated frame to the second device. Correspondingly, the second device receives the aggregated frame from the first device.

The aggregated frame includes at least one subframe and an SN of each of the at least one subframe. A quantity of the at least one subframe is determined based on the aggregation window size determined in the process of step 201 to step 204.

206: The second device sends a BA frame to the first device.

The BA frame includes a starting sequence number field and a block acknowledgment bitmap field. The starting sequence number field is used to indicate an SSN, and the SSN is determined based on the SN of each of the at least one subframe. The block acknowledgment bitmap field is used to indicate whether each of the at least one subframe is successfully received.

For example, the SSN may be an SN of the 1^{st} subframe in the aggregated frame, or may be a difference between an SN of a last subframe in the aggregated frame and a value 1. The value 1 is equal to the aggregation window size corresponding to the aggregated session minus 1.

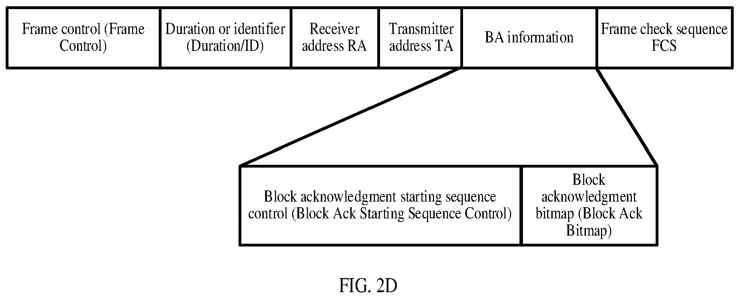

For example, FIG. 2D is a schematic diagram of a structure of a BA frame according to an embodiment of this application. The BA frame includes a BA information field, and the BA information field includes a block acknowledgment starting sequence control (block ack starting sequence control) field and a block acknowledgment bitmap (Block Ack Bitmap) field. The block acknowledgment starting sequence control field includes a starting sequence number field, and the starting sequence number field is used to indicate a starting sequence number. The block acknowledgment bitmap field is used to indicate whether a subframe corresponding to the starting sequence number and a subsequent subframe starting from the starting sequence number have been successfully received.

For example, the starting sequence number field is used to indicate SN2. The block acknowledgment bitmap field includes 64 bits, the 64 bits respectively correspond to 64 subframes, and each bit is used to indicate whether a corresponding subframe has been successfully received. For example, a bit 1 indicates a receiving success, and a bit 0 indicates a receiving failure. Therefore, it can be learned that the 1^{st} bit in the block acknowledgment bitmap field indicates a receiving status of a subframe whose sequence number is SN2. The 2^{nd} bit in the block acknowledgment bitmap field indicates a receiving status of a subframe whose sequence number is SN3, and by analogy, the 64^{th} bit indicates a receiving status of a subframe whose sequence number is SN65.

Therefore, for a subframe that fails to be received, the first device may retransmit the subframe to the second device. Specifically, the first device determines, based on the BA information field in the BA frame, a status of receiving each subframe in the aggregated frame by the second device.

207: The first device sends a delete BA frame to the second device. Correspondingly, the second device receives the delete BA frame from the first device.

The delete BA frame is used to request to delete the aggregated session.

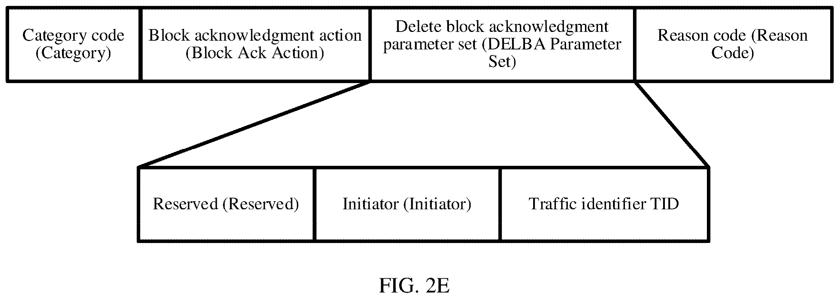

The following describes a schematic diagram of a possible frame structure of the delete BA frame with reference to FIG. 2E. The following describes, with reference to Table 3, functions of fields in the delete BA frame shown in FIG. 2E.

**Table 3**

| Category (Category) | BA frame |
|---|---|
| BA action (Block ack action) | Delete BA frame |
| Delete parameter set (DELBA parameter set) | Reserved (Reserved): reserved bit |
| | Initiator (Initiator): indicating whether the first device is a data transmitter or a data receiver of the aggregated session, where being set to 1 indicates a data transmitter, and being set to 0 indicates a data receiver |
| | TID: identifier of the service type |
| Reason code (Reason Code) | Indicate a reason code for deleting aggregation, that is, a reason for deleting the aggregated session |

208: The second device sends an ACK3 to the first device. Correspondingly, the first device receives the ACK3 from the second device.

The ACK3 is used to indicate that the second device successfully receives the delete BA frame.

To implement fast STA handover, a STA may go online on a plurality of APs in advance. When the STA is handed over from an AP 1 to an AP 2, the STA does not need to re-establish a link, and the STA may directly communicate with the AP 2. However, no aggregated session is established between the AP 2 and the STA. As a result, the STA and the AP 2 cannot perform aggregated transmission. Consequently, service interruption or freezing of the STA occurs, and communication quality of the STA is affected.

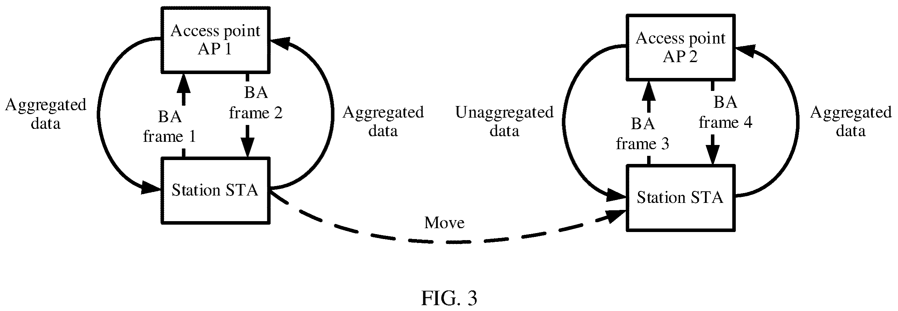

For example, as shown in FIG. 3, a STA accesses an AP 1 and an AP 2. The STA establishes an uplink aggregated session and a downlink aggregated session with the AP 1, and performs uplink aggregated transmission and downlink aggregated transmission with the AP1. When the STA roams to the AP 2, the AP2 directly provides a communication service for the STA. However, no aggregated session is established between the AP 2 and the STA. The AP 2 sends non-aggregated data to the STA. The STA side considers that the STA has established an aggregated session, and therefore, the STA sends aggregated data to the AP 2. However, because no aggregated session is established between the AP 2 and the STA, an SSN in a BA frame 4 returned by the AP 2 is incorrect.

It can be learned that, when the STA accesses the AP 2 in advance, after the STA roams to the AP 2, the STA is still in an aggregation state. However, the AP 2 is not in an aggregation state. As a result, the following two possible cases may occur. 1. The AP 2 needs to re-establish aggregation with the STA, but the STA is actually in an aggregation state. Therefore, an aggregated session cannot be established between the AP 2 and the STA. Consequently, aggregated transmission cannot be performed between the AP 2 and the STA, and service interruption occurs. 2. The STA sends aggregated data to the AP 2, but the AP 2 cannot perform correct acknowledgment. As a result, the STA incorrectly considers that the AP 2 fails to receive the aggregated data, and therefore, the STA repeatedly retransmits the aggregated data. Consequently, service freezing occurs, or the STA is even offline. This application provides corresponding technical solutions. For details, refer to related descriptions in the following embodiments.

The following describes a technical term in this application.

Aggregation flag bit corresponding to an aggregated session: Each aggregated session may correspond to one aggregation flag bit, to indicate a status of the aggregated session. For example, if a value of the aggregation flag bit corresponding to the aggregated session is false (false), it indicates that a device does not actively establish the aggregated session, or the device cannot establish the aggregated session. If the value of the aggregation flag bit corresponding to the aggregated session is true (true), it indicates that the device may actively establish the aggregated session, or the device may establish the aggregated session.

The following describes the technical solutions of this application by using specific embodiments.

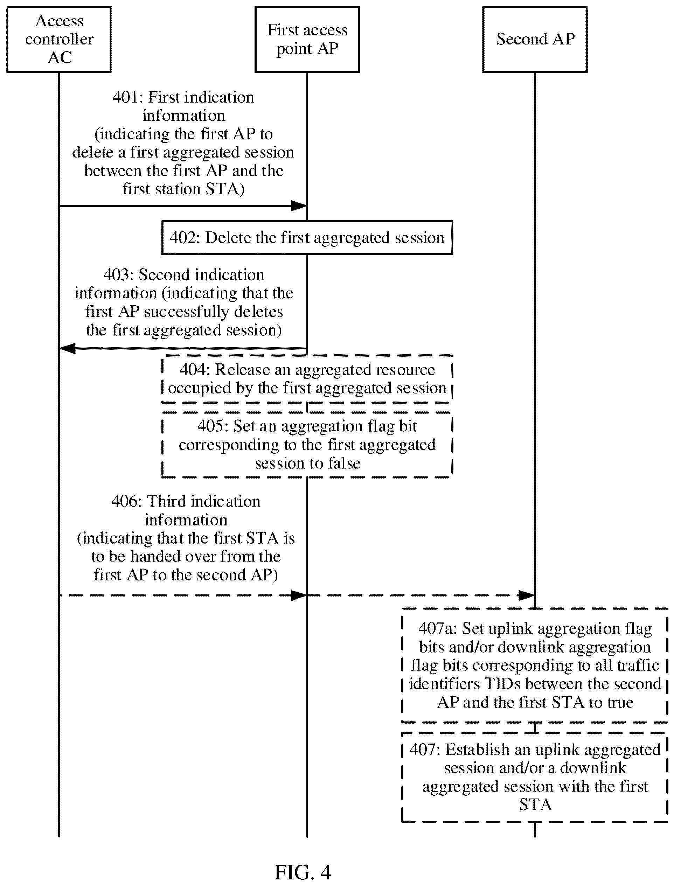

FIG. 4 is a schematic diagram of a first embodiment of a communication method according to an embodiment of this application. Refer to FIG. 4. The method includes the following steps.

401: An AC sends first indication information to a first AP. The first indication information indicates the first AP to delete a first aggregated session between the first AP and a first STA. Correspondingly, the first AP receives the first indication information from the AC.

The first AP is an AP that provides a communication service for the first STA before handover of the first STA. Aggregated transmission may be performed between the first AP and the first STA.

Optionally, the first aggregated session includes all or some aggregated sessions between the first AP and the first STA.

Optionally, the first aggregated session includes an uplink aggregated session and/or a downlink aggregated session between the first AP and the first STA. Alternatively, the first aggregated session includes an uplink aggregated session and/or a downlink aggregated session corresponding to a specified TID between the first AP and the first STA. The following mainly uses an example in which the first aggregated session includes all aggregated sessions between the first AP and the first STA for description.

Optionally, the AC is an independent device, or the AC is integrated into a second AP, or the AC is integrated into the first AP. When the AC is an independent device or when the AC is integrated into the second AP, the first AP may determine, through step 401, to delete the first aggregated session. When the AC is integrated into the first AP, step 401 may be replaced with that the first AP autonomously determines to delete the first aggregated session between the first AP and the first STA.

402: The first AP deletes the first aggregated session.

The following describes two possible implementations of step 402.

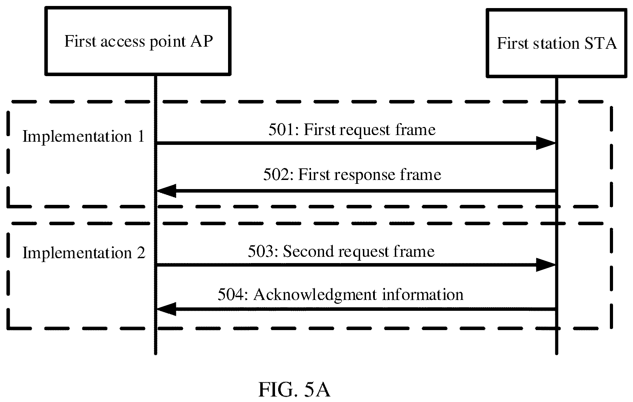

The following describes an implementation 1 with reference to step 501 and step 502 in an embodiment shown in FIG. 5A. Optionally, step 402 specifically includes step 501 and step 502.

501: The first AP sends a first request frame to the first STA. Correspondingly, the first STA receives the first request frame from the first AP.

The first request frame is used to request to delete the first aggregated session.

Specifically, the first request frame is a newly defined frame, and the first request frame may be referred to as a delete block acknowledgment request (Delba Request) frame. A frame structure of the first request frame is similar to the frame structure of the delete BA frame. For details, refer to related descriptions of the delete BA frame in FIG. 2E. A difference lies in that the first request frame further includes a dialog token field. A length of the dialog token field is the same as a length of a dialog token field in the following step 502.

Optionally, the first request frame includes first information and a TID corresponding to the first aggregated session.

The first information is used to indicate whether the first AP is a data transmitter or a data receiver of the first aggregated session. For example, if the first aggregated session is a downlink aggregated session, the first AP serves as a data transmitter. Alternatively, if the first aggregated session is an uplink aggregated session, the first AP serves as a data receiver.

502: The first STA sends a first response frame to the first AP. Correspondingly, the first AP receives the first response frame from the first STA.

The first response frame is a response to the first request frame. The first response frame includes second information, the TID corresponding to the first aggregated session, and a reason code. The second information is used to indicate whether the first STA is a data transmitter or a data receiver of the first aggregated session. The reason code is used to indicate a deletion status of deleting the first aggregated session by the first STA.

Optionally, the first request frame may be referred to as a deletion request frame, and the first response frame may be referred to as a deletion response frame.

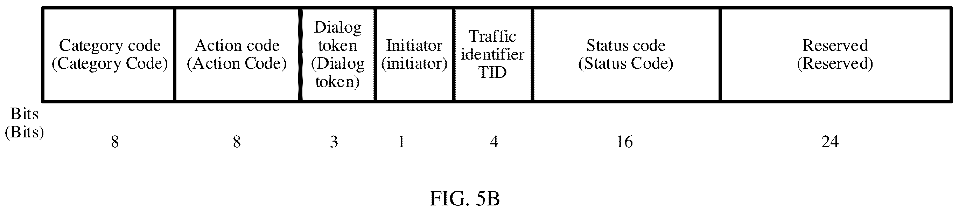

For example, FIG. 5B is a schematic diagram of a structure of a first response frame according to an embodiment of this application. Refer to FIG. 5B. The first response frame includes a category code (Category Code) field, an action code (Action Code) field, a dialog token (Dialog token) field, an initiator (initiator) field, a TID field, a status code (Status Code) field, and a reserved (Reserved) field. The following describes the fields in the first response frame with reference to Table 4.

**Table 4**

| Category code (Category Code) | BA frame |
|---|---|
| Action code (Action Code) | Add a BA frame of a deletion response (Delba Response) frame type |
| Dialog token (Dialog token) | Used to match the first request frame |
| Initiator (initiator) | The initiator (initiator) field is used to indicate a deletion direction, where if a value of the initiator field is 1, it indicates that the first STA is a data transmitter of the first aggregated session; if the value of the initiator field is 0, it indicates that the first STA is a data receiver of the first aggregated session; and an aggregation parameter in the first request frame is consistent with an aggregation parameter in the first response frame |
| TID | Used to indicate the TID of the deleted first aggregated session, where the TID carried in the first request frame is consistent with the TID carried in the first response frame |
| Status code (Status Code) | Used to indicate the deletion status of deleting the first aggregated session by the first STA, where if a value of the status code field is 0, it indicates that the first aggregated session is successfully deleted; and another value of the status code field indicates a failure reason code corresponding to a failure in deleting the first aggregated session |
| Reserved (Reserved) | Reserved bit |

It should be noted that a value of the dialog token field in the first request frame is the same as a value of the dialog token field in the first response frame. This indicates that the first response frame is a response to the first request frame.

It should be noted that, a length of each field in the first response frame shown in FIG. 5B is merely an example. In actual application, the length of each field may be set based on an actual requirement. This is not specifically limited in this application.

It can be learned that in this implementation, the first STA may feed back the first response frame to the first AP for the first request frame, so that the first AP determines the deletion status of the first aggregated session.

The following describes an implementation 2 with reference to step 503 and step 504 in the embodiment shown in FIG. 5A. Optionally, step 402 specifically includes step 503 and step 504.

503: The first AP sends a second request frame to the first STA. Correspondingly, the first STA receives the second request frame from the first AP.

The second request frame is used to request to delete the first aggregated session between the first AP and the first STA.

Optionally, the second request frame is a delete BA frame specified in a communication protocol. For details, refer to related descriptions of the delete BA frame shown in FIG. 2E. For example, the second request frame includes a TID corresponding to the first aggregated session and information about whether the first AP serves as a data transmitter or a data receiver of the first aggregated session.

504: The first STA sends acknowledgment information to the first AP. Correspondingly, the first AP receives the acknowledgment information from the first STA.

The acknowledgment information is used to indicate that the first STA successfully receives the second request frame. In this case, for the first AP, the first aggregated session is deleted by default.

It should be noted that, optionally, before step 402, the first AP may traverse uplink aggregated sessions and downlink aggregated sessions corresponding to all TIDs between the first AP and the first STA. Then, the first AP deletes each aggregated session between the first AP and the first STA through the implementation 1 or the implementation 2 shown in FIG. 5A.

403: The first AP sends second indication information to the AC. The second indication information indicates that the first AP successfully deletes the first aggregated session.

Specifically, the first aggregated session includes all the aggregated sessions between the first AP and the first STA. If the first AP determines that all the aggregated sessions are successfully deleted, the first AP may perform step 403. If the deletion fails, the first AP continues to perform deletion until all the aggregated sessions are successfully deleted.

Optionally, the AC is an independent device, or the AC is integrated into the second AP, or the AC is integrated into the first AP. When the AC is an independent device or when the AC is integrated into the second AP, the first AP may notify, through step 403, that the first aggregated session is successfully deleted. When the AC is integrated into the first AP, step 403 may not occur.

Optionally, the embodiment shown in FIG. 4 further includes step 404. Step 404 may be performed after step 403.

404: The first AP releases an aggregated resource occupied by the first aggregated session.

Optionally, the first aggregated session includes a plurality of aggregated sessions between the first AP and the first STA. Each time the first AP deletes one aggregated session, the first AP releases an aggregated resource occupied by the aggregated session.

Optionally, the embodiment shown in FIG. 4 further includes step 405. Step 405 may be performed after step 403.

405: The first AP sets an aggregation flag bit corresponding to the first aggregated session to false.

Specifically, after the first AP deletes the first aggregated session, the first AP may set the aggregation flag bit corresponding to the first aggregated session to false. The first AP does not actively establish the first aggregated session with the first STA, or the first AP does not establish the first aggregated session with the first STA.

It should be noted that optionally, if the embodiment shown in FIG. 4 further includes step 404, step 405 may be performed after step 404.

Optionally, the embodiment shown in FIG. 4 further includes step 406. Step 406 may be performed after step 403.

406: The AC sends third indication information to the first AP and the second AP. The third indication information indicates that the first STA is to be handed over from the first AP to the second AP. Correspondingly, the first AP and the second AP receive the third indication information from the AC.

For example, a signal strength of a signal transmitted by the first AP reaching the first STA is less than a signal strength of a signal transmitted by the second AP reaching the first STA. The AC may determine that the second AP is to provide a communication service for the first STA. Therefore, the AC may send the third indication information to the first AP and the second AP. In this way, the second AP provides a communication service for the first STA.

Optionally, the AC is an independent device, or the AC is integrated into the first AP, or the AC is integrated into the second AP. When the AC is integrated into the first AP, step 406 is replaced with that the AC sends the second indication information to the second AP, and the first AP autonomously determines that the first STA is to be handed over from the first AP to the second AP. When the AC is integrated into the second AP, step 406 is replaced with that the AC sends the third indication information to the first AP, and the second AP autonomously determines to hand over the first STA from the first AP to the second AP.

It should be noted that optionally, if the embodiment shown in FIG. 4 further includes step 404 and step 405, step 406 may be performed after step 405.

Optionally, the embodiment shown in FIG. 4 further includes step 407. Step 407 may be performed after step 406.

407: The second AP establishes an uplink aggregated session and/or a downlink aggregated session with the first STA.

For a process of establishing the uplink aggregated session and/or the downlink aggregated session between the second AP and the first STA, refer to related descriptions of the aggregated session establishment process shown in FIG. 2A. Details are not described herein again.

Optionally, the embodiment shown in FIG. 4 further includes step 407a. Step 407a may be performed before step 407.

407a: The second AP sets uplink aggregation flag bits and/or downlink aggregation flag bits corresponding to all TIDs between the second AP and the first STA to true.

In step 407a, the second AP sets the uplink aggregation flag bits and/or the downlink aggregation flag bits corresponding to all the TIDs between the second AP and the first STA to true. This indicates that the second AP may normally establish an aggregated session with the first STA, so that the second AP establishes an aggregated session with the first STA.

In this embodiment of this application, the first AP receives the first indication information from the AC. The first indication information indicates the first AP to delete the first aggregated session between the first AP and the first STA. Then, the first AP deletes the first aggregated session. The first AP sends the second indication information to the AC. The second indication information indicates that the first AP successfully deletes the first aggregated session. It can be learned that, the first AP deletes the first aggregated session based on the first indication information, and indicates, to the AC by using the second indication information, that the first aggregated session is successfully deleted. Therefore, the AC indicates to hand over the first STA to the second AP. Before the first STA is handed over to the second AP, the first AP first deletes the first aggregated session based on the first indication information of the AC, so that after the first STA is handed over to the second AP, the first STA and the second AP establish an aggregated session, and perform aggregated transmission, thereby avoiding a problem that aggregated transmission cannot be performed between the first STA and the second AP because the first STA and the second AP cannot establish an aggregated session, avoiding service interruption or freezing of the first STA, and improving communication quality of the first STA.

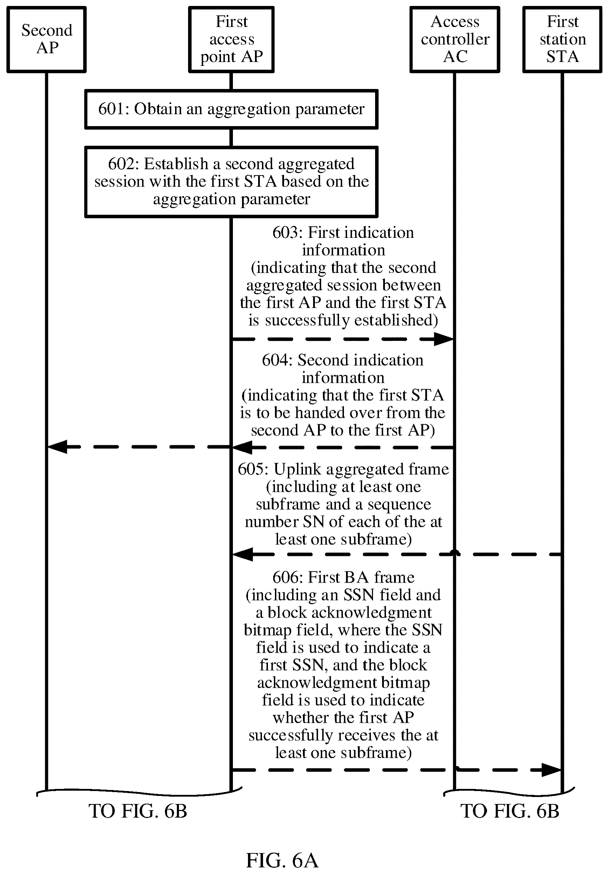

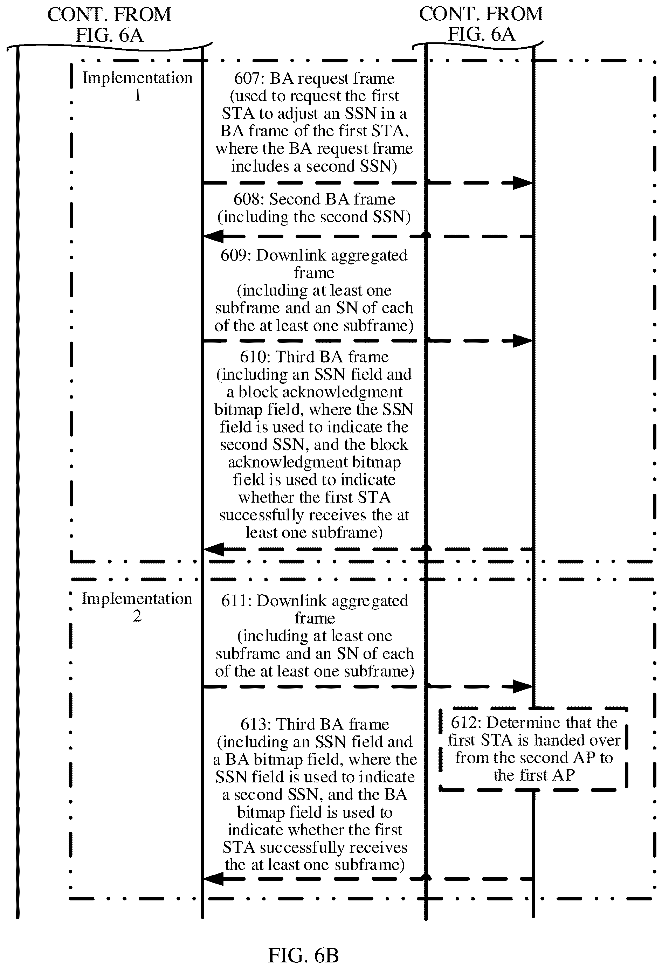

FIG. 6A and FIG. 6B are a schematic diagram of a third embodiment of a communication method according to an embodiment of this application. Refer to FIG. 6A and FIG. 6B. The method includes the following steps.

601: A first AP obtains an aggregation parameter.

After establishment of a first aggregated session between a second AP and a first STA is completed, the first AP obtains the aggregation parameter.

The second AP is an AP that provides a communication service for the first STA before handover of the first STA. The first aggregated session has been established between the second AP and the first STA, and aggregated transmission may be performed between the second AP and the first STA. The first AP is an AP to which the first STA is to be handed over, and the first AP is configured to provide a communication service for the first STA after handover of the first STA.

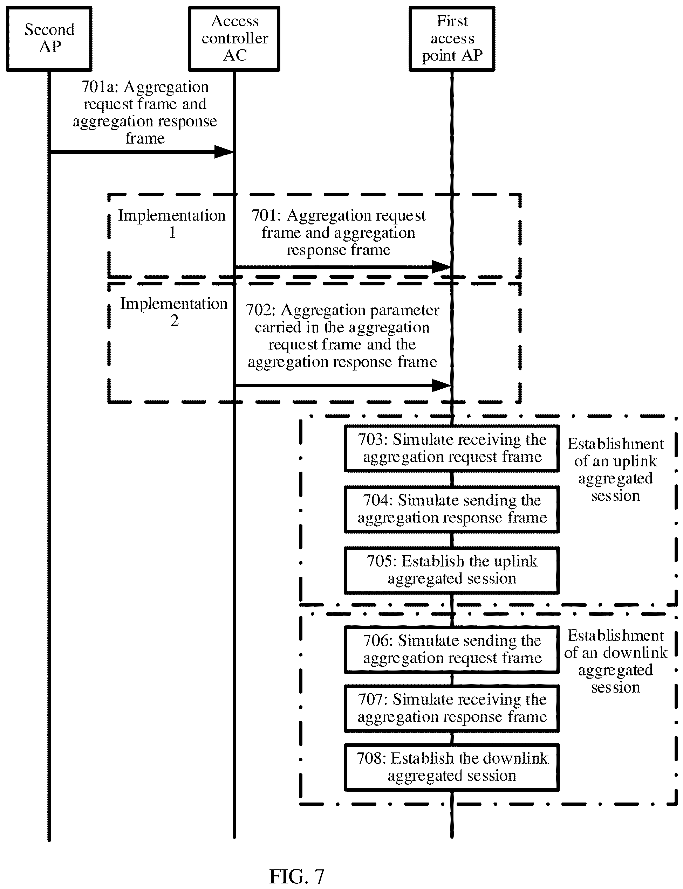

The following describes an implementation 1 with reference to step 701 in an embodiment shown in FIG. 7. Optionally, step 601 specifically includes step 701.

701: An AC sends an aggregation request frame and an aggregation response frame to the first AP. Correspondingly, the first AP receives the aggregation request frame and the aggregation response frame from the AC.

The aggregation request frame and the aggregation response frame are used to establish the first aggregated session between the second AP and the first STA. The aggregation parameter is carried in the aggregation request frame and the aggregation response frame.

Specifically, the aggregation request frame and the aggregation response frame are transmitted in a process of establishing the first aggregated session between the second AP and the first STA.

For example, the aggregation request frame includes a TID corresponding to the first aggregated session, an SSN, and an aggregation window size. The aggregation response frame is a response frame to the aggregation request frame. The aggregation response frame includes the TID corresponding to the first aggregated session and an establishment status of establishing the first aggregated session by the first STA. The establishment status includes a success or a failure. If the establishment fails, the aggregation response frame further includes a reason code, and the reason code is used to indicate a failure reason.

The following describes an implementation 2 with reference to step 702. Optionally, step 601 specifically includes step 702.

702: The AC sends, to the first AP, the aggregation parameter carried in the aggregation request frame and the aggregation response frame. Correspondingly, the first AP receives the aggregation parameter carried in the aggregation request frame and the aggregation response frame from the AC.

For the aggregation parameter carried in the aggregation request frame and the aggregation response frame, refer to the foregoing descriptions of related parameters included in the aggregation request frame and the aggregation response frame. Details are not described herein again.

Optionally, the embodiment shown in FIG. 7 further includes step 701a. Step 701a may be performed before step 701 or step 702.

701a: The second AP sends the aggregation request frame and the aggregation response frame to the AC. Correspondingly, the AC receives the aggregation request frame and the aggregation response frame from the second AP.

It should be noted that optionally, the AC is an independent device, or the AC is integrated into the first AP, or the AC is integrated into the second AP. This is not specifically limited in this application. When the AC is an independent device, the first AP receives the aggregation parameter from the AC. When the AC is integrated into the first AP, the first AP autonomously determines the aggregation parameter. When the AC is integrated into the second AP, the first AP receives the aggregation parameter from the second AP.

602: The first AP establishes a second aggregated session with the first STA based on the aggregation parameter.

In a possible implementation, the first AP receives the aggregation request frame and the aggregation response frame from the AC. In this implementation, the following describes step 602 with reference to FIG. 7.

Optionally, the first aggregated session is a downlink aggregated session. The following describes step 602 with reference to step 703 to step 705. Optionally, step 602 specifically includes step 703 to step 705.

703: The first AP simulates receiving the aggregation request frame.

Specifically, after the first AP receives the aggregation request frame and the aggregation response frame from the AC, the first AP may actively simulate receiving the aggregation request frame.

704: The first AP simulates sending the aggregation response frame.

705: The first AP establishes an uplink aggregated session.

Optionally, step 705 specifically includes at least one of the following: The first AP determines an aggregated resource occupied by the uplink aggregated session. Alternatively, the first AP sets an aggregation flag bit corresponding to the uplink aggregated session to true.

Optionally, the first aggregated session is an uplink aggregated session. The following describes step 602 with reference to step 706 to step 708. Optionally, step 602 specifically includes step 706 to step 708.

706: The first AP simulates sending the aggregation request frame.

Specifically, after the first AP receives the aggregation request frame and the aggregation response frame from the AC, the first AP may actively simulate sending the aggregation request frame.

707: The first AP simulates receiving the aggregation response frame.

708: The first AP establishes a downlink aggregated session.

Optionally, step 708 specifically includes at least one of the following: The first AP determines an aggregated resource occupied by the downlink aggregated session. Alternatively, the first AP sets an aggregation flag bit corresponding to the downlink aggregated session to true.

In another possible implementation, the first AP receives the aggregation parameter carried in the aggregation request frame and the aggregation response frame from the AC. In this case, step 602 specifically includes: The first AP establishes an aggregated session with the first STA based on the aggregation parameter carried in the aggregation request frame and the aggregation response frame. A process of establishing the aggregated session between the first AP and the first STA is similar to the process of step 703 to step 705 or step 706 to step 708. For details, refer to the descriptions of the process of step 703 to step 705 or step 706 to step 708. Details are not described herein again.

Optionally, the embodiment shown in FIG. 6A and FIG. 6B further includes step 603. Step 603 may be performed after step 602.

603: The first AP sends first indication information to the AC. The first indication information indicates that the second aggregated session between the first AP and the first STA is successfully established. Correspondingly, the AC receives the first indication information from the first AP.

In this implementation, the first AP may feed back the first indication information to the AC. Therefore, the AC determines that the second aggregated session between the first AP and the first STA is successfully established, so that the AC indicates, based on an actual situation, the first STA to be handed over to the first AP.

Optionally, the embodiment shown in FIG. 6A and FIG. 6B further includes step 604. Step 604 may be performed after step 602.

604: The AC sends second indication information to the first AP and the second AP. The second indication information indicates that the first STA is to be handed over from the second AP to the first AP. Correspondingly, the first AP and the second AP receive the second indication information from the AC.

It should be noted that optionally, if the embodiment shown in FIG. 6A and FIG. 6B further includes step 603, step 604 may be performed after step 603.

Optionally, the embodiment shown in FIG. 6A and FIG. 6B further includes step 605 and step 606. Step 605 and step 606 may be performed after step 604.

605: The first STA sends an uplink aggregated frame to the first AP. The uplink aggregated frame includes at least one subframe and an SN of each of the at least one subframe. Correspondingly, the first AP receives the uplink aggregated frame from the first STA.

In the process of step 602, an uplink aggregated session is established between the first STA and the first AP. The first STA sends the uplink aggregated frame to the first AP based on an aggregation parameter corresponding to the uplink aggregated session. For example, a quantity of the at least one subframe is determined based on an aggregation window size corresponding to the uplink aggregated session. For example, if the aggregation window size is 64, the quantity of the at least one subframe may be 64.

606: The first AP sends a first BA frame to the first STA. The first BA frame includes an SSN field and a block acknowledgment bitmap field, the SSN field is used to indicate a first SSN, and the block acknowledgment bitmap field is used to indicate whether the first AP successfully receives the at least one subframe. Correspondingly, the first STA receives the first BA frame from the first AP.

The first SSN is determined by the first AP based on the SN of each of the at least one subframe.

The following describes two possible implementations in which the first AP determines the first SSN.

Implementation 1: A value of the first SSN is an SN in the 1^{st} subframe in the uplink aggregated frame.

For example, the SN of the 1^{st} subframe in the uplink aggregated frame is SN1, and SNs respectively corresponding to the at least one subframe in the uplink aggregated frame are SN1 to SN64. In this case, the first AP may set the value of the first SSN to SN1. Therefore, the 1^{st} bit in the block acknowledgment bitmap field is used to indicate a status of receiving the subframe SN1 by the first AP, the 2^{nd} bit is used to indicate a status of receiving the subframe SN2 by the first AP, and by analogy, the 64^{th} bit is used to indicate a status of receiving the subframe SN64 by the first AP.

Implementation 2: A value of the first SSN is equal to a difference between an SN of a last subframe in the uplink aggregated frame and a first value. The first value is equal to an aggregation window size corresponding to the first aggregated session minus 1.

For example, the SN of the last subframe in the uplink aggregated frame is SN63, and the aggregation window size is 64. In this case, the first AP may set the value of the first SSN to SN0. SNs respectively corresponding to the at least one subframe in the uplink aggregated frame are SN0 to SN63. Therefore, the 1^{st} bit in the block acknowledgment bitmap field is used to indicate a status of receiving the subframe SN0 by the first AP, the 2^{nd} bit is used to indicate a status of receiving the subframe SN1 by the first AP, and by analogy, the 64^{th} bit is used to indicate a status of receiving the subframe SN63 by the first AP.

The foregoing two implementations are merely examples. This application is also applicable to another implementation. A specific manner of determining the first SSN may be determined by a sliding window manner of a chip in the first AP.

It should be noted that optionally, the first STA needs to adjust an SSN of a BA frame of the first STA, to implement downlink aggregated transmission with the first AP. The following describes two possible implementations.

It should be noted that optionally, if the embodiment shown in FIG. 6A and FIG. 6B further includes step 603 and step 604, step 605 and step 606 may be performed after step 604.

The following describes an implementation 1 with reference to step 607 and step 608. Optionally, the embodiment shown in FIG. 6A and FIG. 6B further includes step 607 and step 608. Step 607 and step 608 may be performed after step 602.

607: The first AP sends a BA request frame to the first STA. The BA request frame is used to request the first STA to adjust an SSN in a BA frame of the first STA, and the BA request frame includes a second SSN. Correspondingly, the first STA receives the BA request frame from the first AP.

The second SSN is determined by the first AP based on an SN corresponding to at least one subframe to be sent by the first AP to the first STA. For example, the second SSN is an SN of the 1^{st} subframe to be sent by the first AP to the first STA.

The first STA is handed over from the second AP to the first AP. An SSN maintained on the first STA side is determined based on an SN respectively corresponding to at least one subframe in an aggregated frame sent by the second AP. An SN of a subframe in an uplink aggregated frame to be sent by the first AP to the first STA does not continue from the SN of the subframe in a downlink aggregated frame sent by the second AP to the first STA. Therefore, the first AP sends the BA request frame to the first STA, to request the first STA to adjust the SSN in the BA frame of the first STA, so that downlink aggregated transmission is normally performed between the first STA and the first AP.

608: The first STA sends a second BA frame to the first AP. The second BA frame includes the second SSN. Correspondingly, the first AP receives the second BA frame from the first STA.

Specifically, after the first STA receives the BA request frame, the first STA adjusts an SSN in the second BA frame, and sends the second BA frame to the first AP. The second BA frame includes the second SSN.

It should be noted that optionally, if the embodiment shown in FIG. 6A and FIG. 6B further includes step 603 and step 604, step 607 and step 608 may be performed after step 604.

It should be noted that optionally, there is no fixed execution sequence between steps 605 and 606 and steps 607 and 608. Step 605 and step 606 may be first performed, and then step 607 and step 608 are performed. Alternatively, step 607 and step 608 are first performed, and then step 605 and step 606 are performed. Alternatively, steps 605 and 606 and steps 607 and 608 are simultaneously performed based on a situation. This is not specifically limited in this application.

Optionally, the embodiment shown in FIG. 6A and FIG. 6B further includes step 609 and step 610. Step 609 and step 610 may be performed after step 608.

609: The first AP sends a downlink aggregated frame to the first STA. The downlink aggregated frame includes at least one subframe and an SN of each of the at least one subframe. Correspondingly, the first STA receives the downlink aggregated frame from the first AP.

610: The first STA sends a third BA frame to the first AP. The third BA frame includes an SSN field and a block acknowledgment bitmap field. The SSN field is used to indicate the second SSN, and the block acknowledgment bitmap field is used to indicate whether the first STA successfully receives the at least one subframe. Correspondingly, the first AP receives the third BA frame from the first STA.

Step 607 and step 608 show a process of adjusting the second SSN between the first AP and the first STA, so that the first AP and the first STA perform downlink aggregated transmission through step 609 and step 610.

The following describes an implementation 2 with reference to step 611 to step 613. Optionally, the embodiment shown in FIG. 6A and FIG. 6B further includes step 611 to step 613. Step 611 to step 613 may be performed after step 602.

611: The first AP sends a downlink aggregated frame to the first STA. The downlink aggregated frame includes at least one subframe and an SN of each of the at least one subframe. Correspondingly, the first STA receives the downlink aggregated frame from the first AP.

612: The first STA determines that the first STA is handed over from the second AP to the first AP.

In a possible implementation, the first STA receives indication information from the first AP. The indication information indicates that the first STA has been handed over to the first AP.

613: The first STA sends a third BA frame to the first AP. The third BA frame includes an SSN field and a block acknowledgment bitmap field. The SSN field is used to indicate a second SSN, and the block acknowledgment bitmap field is used to indicate whether the first STA successfully receives the at least one subframe. Correspondingly, the first AP receives the third BA frame from the first STA.

In this implementation, after the first STA determines that the first STA has been handed over to the first AP, and after the first STA receives the downlink aggregated frame, the first STA may determine the second SSN based on an SN respectively corresponding to the at least one subframe in the downlink aggregated frame. Then, the first STA sends the third BA frame to the first AP.

It should be noted that optionally, there is no fixed execution sequence between steps 605 and 606 and steps 611 to 613. Step 605 and step 606 may be first performed, and then step 611 to step 613 are performed. Alternatively, step 611 to step 613 are first performed, and then step 605 and step 606 are performed. Alternatively, steps 605 and 606 and steps 611 to 613 are simultaneously performed based on a situation. This is not specifically limited in this application.

In this embodiment of this application, after establishment of the first aggregated session between the second AP and the first STA is completed, the first AP obtains the aggregation parameter. The aggregation parameter is an aggregation parameter used to establish the first aggregated session between the second AP and the first STA.

The first AP establishes the second aggregated session with the first STA based on the aggregation parameter. It can be learned that, after establishment of the first aggregated session between the second AP and the first STA is completed, the first AP obtains the aggregation parameter, and establishes the second aggregated session with the first STA based on the aggregation parameter. After establishment of the first aggregated session between the second AP and the first STA is completed, the first AP establishes an aggregated session with the first STA in advance. In this way, after the first STA is handed over to the first AP, the first AP and the first STA perform aggregated transmission, thereby avoiding service interruption or freezing of the first STA due to a failure in aggregated transmission between the first STA and the first AP, and improving communication quality of the first STA.

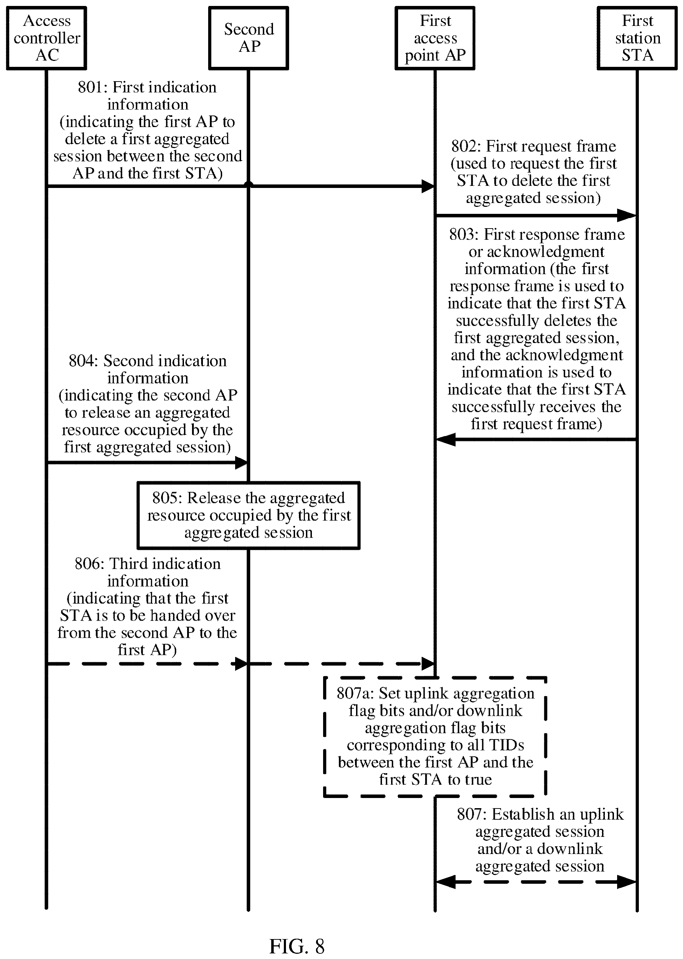

FIG. 8 is a schematic diagram of a fifth embodiment of a communication method according to an embodiment of this application. Refer to FIG. 8. The method includes the following steps.

801: An AC sends first indication information to a first AP. The first indication information indicates the first AP to delete a first aggregated session between a second AP and a first STA. Correspondingly, the first AP receives the first indication information from the AC.

The first AP is an AP to which the first STA is to be handed over, and is configured to provide a communication service for the first STA after handover.

The second AP is an AP that provides a communication service for the first STA before handover of the first STA. The first aggregated session has been established between the second AP and the first STA, and aggregated transmission may be performed between the second AP and the first STA.

Optionally, the first aggregated session includes all or some aggregated sessions between the second AP and the first STA.

Optionally, the first aggregated session includes an uplink aggregated session and/or a downlink aggregated session between the second AP and the first STA. Alternatively, the first aggregated session includes an uplink aggregated session and/or a downlink aggregated session corresponding to a specified TID between the second AP and the first STA. The following mainly uses an example in which the first aggregated session includes all aggregated sessions between the second AP and the first STA for description.

Optionally, the AC is an independent device, or the AC is integrated into the first AP, or the AC is integrated into the second AP. When the AC is an independent device, the first AP determines, in the manner of step 801, to delete the first aggregated session. When the AC is integrated into the first AP, the first AP autonomously determines to delete the first aggregated session. When the AC is integrated into the second AP, the first AP receives the first indication information from the second AP.

802: The first AP sends a first request frame to the first STA. The first request frame is used to request the first STA to delete the first aggregated session. Correspondingly, the first STA receives the first request frame from the first AP.

The first AP sends the first request frame to the first STA, to indicate the first STA to delete the first aggregated session. The first AP does not have an aggregated resource occupied by the first aggregated session.

The following describes two possible implementations of the first request frame.

Implementation 1: The first request frame is a newly defined frame, and the first request frame may be referred to as a delete block acknowledgment request frame. A frame structure of the first request frame is similar to the frame structure of the delete BA frame. For details, refer to related descriptions of the delete BA frame shown in FIG. 2E. A difference lies in that the first request frame further includes a dialog token field. A length of the dialog token field in the first request frame is the same as a length of a dialog token field in a first response frame in the following step 803.

Optionally, the first request frame includes first information and a TID corresponding to the first aggregated session.

The first information is used to indicate whether the second AP is a data transmitter or a data receiver of the first aggregated session. For example, if the first aggregated session is a downlink aggregated session, the second AP serves as a data transmitter. Alternatively, if the first aggregated session is an uplink aggregated session, the second AP serves as a data receiver.

Implementation 2: The first request frame is a delete BA frame specified in a communication protocol. For details, refer to related descriptions of the delete BA frame shown in FIG. 2E. For example, the second request frame includes a TID corresponding to the first aggregated session and information about whether the second AP serves as a data transmitter or a data receiver of the first aggregated session.

803: The first STA sends a first response frame or acknowledgment information to the first AP. The first response frame is used to indicate that the first STA successfully deletes the first aggregated session, and the acknowledgment information is used to indicate that the first STA successfully receives the first request frame. Correspondingly, the first AP receives the first response frame or the acknowledgment information from the first STA.

Based on the implementation 1 of the first request frame in step 802, the first STA sends the first response frame to the first AP. The first response frame is a response to the first request frame. The first response frame includes second information, the TID corresponding to the first aggregated session, and a reason code. The second information is used to indicate whether the first STA is a data transmitter or a data receiver of the first aggregated session. The reason code is used to indicate a deletion status of deleting the first aggregated session by the first STA. A frame structure of the first response frame is similar to the frame structure of the first response frame in step 502 in the embodiment shown in FIG. 5A. For details, refer to related descriptions of the first response frame in step 502 in the embodiment shown in FIG. 5A.

Based on the implementation 2 of the first request frame in step 802, the first STA sends the acknowledgment information to the first AP. The acknowledgment information is used to indicate that the first STA successfully receives the first request frame. In this case, for the second AP, the first STA successfully deletes the first aggregated session by default.

It should be noted that optionally, that the first STA deletes the first aggregated session may include at least one of the following operations: The first STA releases the aggregated resource occupied by the first aggregated session. Alternatively, the first STA sets an aggregation flag bit corresponding to the first aggregated session to false.

It should be noted that, if the first aggregated session fails to be deleted, the first AP may retransmit the first request frame to the first STA, to re-request the first STA to delete the first aggregated session, so that the first STA successfully deletes the first aggregated session.

804: The AC sends second indication information to the second AP. The second indication information indicates the second AP to release the aggregated resource occupied by the first aggregated session. Correspondingly, the second AP receives the second indication information from the AC.

805: The second AP releases the aggregated resource occupied by the first aggregated session.

Specifically, the second AP releases the aggregated resource occupied by the first aggregated session, but does not send, to the first STA, a request frame used to request to delete the first aggregated session. Optionally, the second AP may set an aggregation flag bit corresponding to the first aggregated session to false, to indicate that the second AP is not allowed to establish the first aggregated session with the first STA, or indicate that the second AP does not actively establish the first aggregated session with the first STA.

Optionally, the embodiment shown in FIG. 8 further includes step 806 and step 807. Step 806 and step 807 may be performed after step 805.

806: The AC sends third indication information to the first AP and the second AP. The third indication information indicates that the first STA is to be handed over from the second AP to the first AP. Correspondingly, the first AP and the second AP receive the third indication information from the AC.

In this implementation, after the second AP receives the third indication information, the second AP does not establish an aggregated session with the first STA.

807: The first AP establishes an uplink aggregated session and/or a downlink aggregated session with the first STA.

Step 807 is similar to step 407 in the embodiment shown in FIG. 4. For details, refer to related descriptions of step 407 in the embodiment shown in FIG. 4. Details are not described herein again.

Optionally, the embodiment shown in FIG. 8 further includes step 807a. Step 807a may be performed before step 807.

807a: The first AP sets uplink aggregation flag bits and/or downlink aggregation flag bits corresponding to all TIDs between the first AP and the first STA to true.

Step 807a is similar to step 407a in the embodiment shown in FIG. 4. For details, refer to related descriptions of step 407a in the embodiment shown in FIG. 4. Details are not described herein again.

In this embodiment of this application, the first AP receives the first indication information from the AC. The first indication information indicates the first AP to delete the first aggregated session between the second AP and the first STA. Then, the first AP sends the first request frame to the first STA. The first request frame is used to request the first STA to delete the first aggregated session. The first AP receives the first response frame or the acknowledgment information from the first STA. The first response frame is used to indicate that the first STA successfully deletes the first aggregated session, and the acknowledgment information is used to indicate that the first STA successfully receives the first request frame. The first AP sends the first request frame to the first STA based on the first indication information, to indicate the first STA to delete the first aggregated session, so that after the first STA is handed over to the first AP, the first STA may establish an aggregated session with the first AP, and perform aggregated transmission with the first AP, thereby avoiding service interruption or freezing of the first STA due to a failure in aggregated transmission between the first STA and the first AP, and improving communication quality of the first STA.

It may be understood that the foregoing method embodiments may be implemented separately, or may be implemented in combination. For terms and conventional technologies in embodiments, refer to each other.

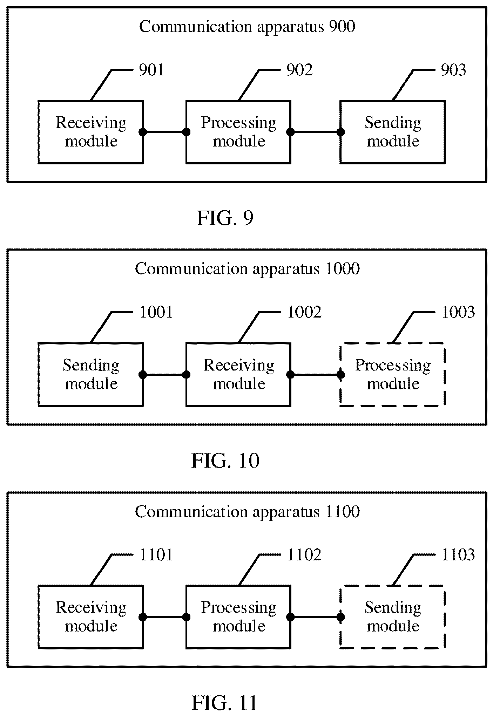

The foregoing describes the communication method in embodiments of this application, and the following describes a communication apparatus in embodiments of this application. FIG. 9 is a schematic diagram of a first structure of a communication apparatus according to an embodiment of this application. Refer to FIG. 9. The communication apparatus 900 includes a receiving module 901, a processing module 902, and a sending module 903.

The communication apparatus 900 is configured to perform some or all steps performed by the first AP in the embodiments shown in FIG. 4 and FIG. 5A. For details, refer to related descriptions in the embodiments shown in FIG. 4 and FIG. 5A. For example, the communication apparatus 900 performs the following solution:

The receiving module 901 is configured to receive first indication information from an AC. The first indication information indicates the communication apparatus 900 to delete a first aggregated session between the communication apparatus 900 and a first STA.

The processing module 902 is configured to delete the first aggregated session.

The sending module 903 is configured to send second indication information to the AC. The second indication information indicates that the communication apparatus 900 successfully deletes the first aggregated session.

This application further provides another communication apparatus. FIG. 10 is a schematic diagram of a second structure of a communication apparatus according to an embodiment of this application. Refer to FIG. 10. The communication apparatus 1000 includes a sending module 1001 and a receiving module 1002. Optionally, the communication apparatus 1000 further includes a processing module 1003.

In a possible implementation, the communication apparatus 1000 is configured to perform some or all steps performed by the AC in the embodiment shown in FIG. 4. For details, refer to related descriptions of the embodiment shown in FIG. 4. For example, the communication apparatus 1000 is configured to perform the following solution:
The sending module 1001 is configured to send first indication information to a first AP. The first indication information indicates the first AP to delete a first aggregated session between the first AP and a first STA.

The receiving module 1002 is configured to receive second indication information from the first AP. The second indication information indicates that the first AP successfully deletes the first aggregated session.

In another possible implementation, the communication apparatus 1000 is configured to perform some or all steps performed by the AC in the embodiments shown in FIG. 6A and FIG. 6B, and FIG. 7. For details, refer to related descriptions of the embodiments shown in FIG. 6A and FIG. 6B, and FIG. 7. For example, the communication apparatus 1000 is configured to perform the following solution:
The receiving module 1002 is configured to receive an aggregation parameter from a second AP. The aggregation parameter is an aggregation parameter used to establish a first aggregated session between the second AP and a first STA.

The sending module 1001 is configured to send the aggregation parameter to a first AP. The aggregation parameter is used by the first AP to establish a second aggregated session with the first STA.

In another possible implementation, the communication apparatus 1000 is configured to perform some or all steps performed by the first AP in the embodiment shown in FIG. 8. For details, refer to related descriptions of the embodiment shown in FIG. 8. For example, the communication apparatus 1000 is configured to perform the following solution:
The receiving module 1002 is configured to receive first indication information from an AC. The first indication information indicates the communication apparatus 1000 to delete a first aggregated session between a second AP and a first STA.

The sending module 1001 is configured to send a first request frame to the first STA. The first request frame is used to request the first STA to delete the first aggregated session.

The receiving module 1002 is further configured to receive a first response frame or acknowledgment information from the first STA. The first response frame is used to indicate that the first STA successfully deletes the first aggregated session, and the acknowledgment information is used to indicate that the first STA successfully receives the first request frame.

This application further provides another communication apparatus. FIG. 11 is a schematic diagram of a third structure of a communication apparatus according to an embodiment of this application. Refer to FIG. 11. The communication apparatus 1100 includes a receiving module 1101 and a processing module 1102. Optionally, the communication apparatus 1100 further includes a sending module 1103.

In a possible implementation, the communication apparatus 1100 is configured to perform some or all steps performed by the second AP in the embodiment shown in FIG. 4. For details, refer to related descriptions of the embodiment shown in FIG. 4. For example, the communication apparatus 1100 is configured to perform the following solution:
The receiving module 1101 is configured to receive the third indication information from an AC. The third indication information indicates that a first STA is to be handed over from a first AP to the communication apparatus 1100.

The processing module 1102 is configured to establish an uplink aggregated session and/or a downlink aggregated session with the first STA.

In another possible implementation, the communication apparatus 1100 is configured to perform some or all steps performed by the first AP in the embodiments shown in FIG. 6A and FIG. 6B, and FIG. 7. For details, refer to related descriptions of the embodiments shown in FIG. 6A and FIG. 6B, and FIG. 7. For example, the communication apparatus 1100 is configured to perform the following solution:
The receiving module 1101 is configured to: after establishment of a first aggregated session between a second AP and a first STA is completed, obtain an aggregation parameter. The aggregation parameter is an aggregation parameter used to establish the first aggregated session between the second AP and the first STA.

The processing module 1102 is configured to establish a second aggregated session with the first STA based on the aggregation parameter.

In still another possible implementation, the communication apparatus 1100 is configured to perform some or all steps performed by the second AP in the embodiment shown in FIG. 8. For details, refer to related descriptions of the embodiment shown in FIG. 8. For example, the communication apparatus 1100 is configured to perform the following solution:
The receiving module 1101 is configured to receive second indication information from an AC. The second indication information indicates the communication apparatus 1100 to release an aggregated resource occupied by a first aggregated session between the communication apparatus 1100 and a first STA.

The processing module 1102 is configured to release the aggregated resource occupied by the first aggregated session.

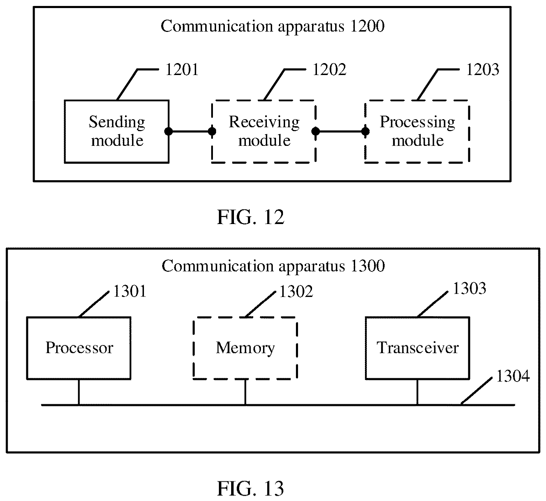

This application further provides still another communication apparatus. FIG. 12 is a schematic diagram of a fourth structure of a communication apparatus according to an embodiment of this application. Refer to FIG. 12. The communication apparatus 1200 includes a sending module 1201. Optionally, the communication apparatus 1200 further includes a receiving module 1202 and a processing module 1203.

The communication apparatus 1200 is configured to perform some or all steps performed by the AC in the embodiment shown in FIG. 8. For details, refer to related descriptions of the embodiment shown in FIG. 8. For example, the communication apparatus 1200 is configured to perform the following solution:
The sending module 1201 is configured to: send first indication information to a first AP, where the first indication information indicates the first AP to delete a first aggregated session between a second AP and a first STA; and send second indication information to the second AP, where the second indication information indicates the second AP to release an aggregated resource occupied by the first aggregated session.

An embodiment of this application further provides another communication apparatus. FIG. 13 is a schematic diagram of a fifth structure of a communication apparatus according to an embodiment of this application. Refer to FIG. 13. The communication apparatus 1300 may be the first AP, the AC, or the second AP in the foregoing method embodiments.

Specifically, the communication apparatus 1300 shown in this embodiment includes a processor 1301, a transceiver 1303, and a bus 1304. Optionally, the communication apparatus 1300 further includes a memory 1302.

Specifically, the memory 1302 may include a computer storage medium in a form of a volatile and/or non-volatile memory, such as a read-only memory and/or a random access memory. The memory 1302 may store an operating system, an application program, another program module, executable code, and program data.

The transceiver 1303 may be configured to input a command and information to the communication apparatus 1300. The transceiver 1303 may be connected to the processor 1301 by using the bus 1304. The transceiver 1303 may be further configured to output information from or input information to the communication apparatus 1300.

When the processor 1301 in the communication apparatus 1300 executes the executable code or the application program stored in the memory 1302, the communication apparatus 1300 may perform the method operations performed by the first AP, the AC, or the second AP in the foregoing method embodiments. For a specific execution process, refer to the foregoing method embodiments. Details are not described herein again.

For example, the receiving module 901 and the sending module 903 shown in FIG. 9 may be used as the transceiver 1303 shown in FIG. 13. The processing module 902 shown in FIG. 9 may be used as the processor 1301 shown in FIG. 13.

For example, the sending module 1001 and the receiving module 1002 shown in FIG. 10 may be used as the transceiver 1303 shown in FIG. 13. The processing module 1003 shown in FIG. 10 may be used as the processor 1301 shown in FIG. 13.

For example, the receiving module 1101 and the sending module 1103 shown in FIG. 11 may be used as the transceiver 1303 shown in FIG. 13. The processing module 1102 shown in FIG. 11 may be used as the processor 1301 shown in FIG. 13.

For example, the sending module 1201 and the receiving module 1202 shown in FIG. 12 may be used as the transceiver 1303 shown in FIG. 13. The processing module 1203 shown in FIG. 12 may be used as the processor 1301 shown in FIG. 13.

An embodiment of this application further provides a communication system. The communication system includes a first AP, an AC, and a second AP. The first AP is configured to perform some or all steps performed by the first AP in the embodiments shown in FIG. 4 and FIG. 5A. The AC is configured to perform some or all steps performed by the AC in the embodiment shown in FIG. 4. The second AP is configured to perform some or all steps performed by the second AP in the embodiment shown in FIG. 4.

An embodiment of this application further provides another communication system. The communication system includes a first AP, an AC, and a second AP. The first AP is configured to perform some or all steps performed by the first AP in the embodiments shown in FIG. 6A and FIG. 6B, and FIG. 7. The AC is configured to perform some or all steps performed by the AC in the embodiments shown in FIG. 6A and FIG. 6B, and FIG. 7. The second AP is configured to perform some or all steps performed by the second AP in the embodiments shown in FIG. 6A and FIG. 6B, and FIG. 7.

An embodiment of this application further provides still another communication system. The communication system includes a first AP, an AC, and a second AP. The first AP is configured to perform some or all steps performed by the first AP in the embodiment shown in FIG. 8. The AC is configured to perform some or all steps performed by the AC in the embodiment shown in FIG. 8. The second AP is configured to perform some or all steps performed by the second AP in the embodiment shown in FIG. 8.

An embodiment of this application further provides a computer program product including instructions. When the computer program product runs on a computer, the computer is enabled to perform the methods in the embodiments shown in FIG. 4, FIG. 5A, and FIG. 6A and FIG. 6B to FIG. 8.

An embodiment of this application further provides a computer-readable storage medium, including computer instructions. When the computer instructions are run on a computer, the computer is enabled to perform the methods in the embodiments shown in FIG. 4, FIG. 5A, and FIG. 6A and FIG. 6B to FIG. 8.

An embodiment of this application further provides a chip apparatus, including a processor, configured to: connect to a memory, and invoke a program stored in the memory, to enable the processor to perform the methods in the embodiments shown in FIG. 4, FIG. 5A, and FIG. 6A and FIG. 6B to FIG. 8.

The processor mentioned anywhere above may be a general-purpose central processing unit, a microprocessor, an application-specific integrated circuit (application-specific integrated circuit, ASIC), or one or more integrated circuits configured to control program execution of the methods in the embodiments shown in FIG. 4, FIG. 5A, and FIG. 6A and FIG. 6B to FIG. 8. The memory mentioned anywhere above may be a read-only memory (read-only memory, ROM), another type of static storage device that can store static information and instructions, a random access memory (random access memory, RAM), or the like.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
receiving, by a first access point AP, first indication information from an access controller AC, wherein the first indication information indicates the first AP to delete a first aggregated session between the first AP and a first station STA;
deleting, by the first AP, the first aggregated session; and
sending, by the first AP, second indication information to the AC, wherein the second indication information indicates that the first AP successfully deletes the first aggregated session.

2. The method according to claim 1, wherein after the sending, by the first AP, second indication information to the AC, the method further comprises:
receiving, by the first AP, third indication information from the AC, wherein the third indication information indicates that the first STA is to be handed over from the first AP to a second AP.

3. The method according to claim 1 or 2, wherein the first aggregated session comprises some or all aggregated sessions established between the first AP and the first STA.

4. The method according to any one of claims 1 to 3, wherein the deleting, by the first AP, the first aggregated session comprises:
sending, by the first AP, a first request frame to the first STA, wherein the first request frame is used to request to delete the first aggregated session, the first request frame comprises first information and a traffic identifier TID corresponding to the first aggregated session, and the first information is used to indicate whether the first AP is a data transmitter or a data receiver of the first aggregated session; and
receiving, by the first AP, a first response frame from the first STA, wherein the first response frame comprises second information, the TID corresponding to the first aggregated session, and a reason code, the second information is used to indicate whether the first STA is a data transmitter or a data receiver of the first aggregated session, and the reason code is used to indicate a deletion status of deleting the first aggregated session by the first STA.

5. The method according to claim 4, wherein a value of a dialog token field in the first request frame is the same as a value of a dialog token field in the first response frame.

6. The method according to claim 4 or 5, wherein the method further comprises:
releasing, by the first AP, an aggregated resource occupied by the first aggregated session.

7. The method according to any one of claims 4 to 6, wherein the method further comprises:
setting, by the first AP, an aggregation flag bit corresponding to the first aggregated session to false.

8. A communication method, wherein the method comprises:
sending, by an access controller AC, first indication information to a first access point AP, wherein the first indication information indicates the first AP to delete a first aggregated session between the first AP and a first station STA; and
receiving, by the AC, second indication information from the first AP, wherein the second indication information indicates that the first AP successfully deletes the first aggregated session.

9. The method according to claim 8, wherein after the receiving, by the AC, second indication information from the first AP, the method further comprises:
sending, by the AC, third indication information to the first AP and a second AP, wherein the third indication information indicates that the first STA is to be handed over from the first AP to the second AP.

10. The method according to claim 8 or 9, wherein the first aggregated session comprises some or all aggregated sessions established between the first AP and the first STA.

11. A communication method, wherein the method comprises:
receiving, by a second access point AP, third indication information from an access controller AC, wherein the third indication information indicates that a first station STA is to be handed over from a first AP to the second AP; and
establishing, by the second AP, an uplink aggregated session and/or a downlink aggregated session with the first STA.

12. The method according to claim 11, wherein after the receiving, by a second access point AP, third indication information from an access controller AC, and before the establishing, by the second AP, an uplink aggregated session and/or a downlink aggregated session with the first STA, the method further comprises:
setting, by the second AP, uplink aggregation flag bits and/or downlink aggregation flag bits corresponding to all traffic identifiers TIDs between the second AP and the first STA to true TRUE.

13. A communication method, wherein the method comprises:
after establishment of a first aggregated session between a second access point AP and a first station STA is completed, obtaining, by a first AP, an aggregation parameter, wherein the aggregation parameter is an aggregation parameter used to establish the first aggregated session between the second AP and the first STA; and
establishing, by the first AP, a second aggregated session with the first STA based on the aggregation parameter.

14. The method according to claim 13, wherein the obtaining, by a first AP, an aggregation parameter comprises:
receiving, by the first AP, an aggregation request frame and an aggregation response frame from an access controller AC, wherein the aggregation request frame and the aggregation response frame are used to establish the first aggregated session between the second AP and the first STA, and the aggregation parameter is carried in the aggregation request frame and the aggregation response frame; or
receiving, by the first AP, the aggregation parameter carried in the aggregation request frame and the aggregation response frame from the AC.

15. The method according to claim 14, wherein the second aggregated session is an uplink aggregated session, and the establishing, by the first AP, a second aggregated session with the first STA based on the aggregation parameter comprises:
simulating, by the first AP, receiving the aggregation request frame;
simulating, by the first AP, sending the aggregation response frame; and
establishing, by the first AP, the second aggregated session.

16. The method according to claim 14, wherein the second aggregated session is a downlink aggregated session, and the establishing, by the first AP, a second aggregated session with the first STA based on the aggregation parameter comprises:
simulating, by the first AP, sending the aggregation request frame;
simulating, by the first AP, receiving the aggregation response frame; and
establishing, by the first AP, the second aggregated session.

17. The method according to any one of claims 13 to 16, wherein after the establishing, by the first AP, a second aggregated session with the first STA based on the aggregation parameter, the method further comprises:
sending, by the first AP, first indication information to the access controller AC, wherein the first indication information indicates that the second aggregated session between the first AP and the first STA is successfully established.

18. The method according to any one of claims 13 to 17, wherein the method further comprises:
receiving, by the first AP, second indication information from the access controller AC, wherein the second indication information indicates that the first STA is to be handed over from the second AP to the first AP.

19. The method according to claim 18, wherein after the receiving, by the first AP, second indication information from the access controller AC, the method further comprises:
receiving, by the first AP, an uplink aggregated frame from the first STA, wherein the uplink aggregated frame comprises at least one subframe and a sequence number SN of each of the at least one subframe; and
sending, by the first AP, a first block acknowledgment BA frame to the first STA, wherein the first BA frame comprises a starting sequence number SSN field and a block acknowledgment bitmap field, the starting sequence number field is used to indicate a first starting sequence number SSN, the first SSN is determined by the first AP based on the sequence number SN of each of the at least one subframe, and the block acknowledgment bitmap field is used to indicate whether the first AP successfully receives the at least one subframe.

20. The method according to claim 19, wherein a value of the first SSN is an SN in the 1^{st} subframe in the uplink aggregated frame; or
a value of the first SSN is equal to a difference between an SN of a last subframe in the uplink aggregated frame and a first value, and the first value is equal to an aggregation window size corresponding to the first aggregated session minus 1.

21. The method according to claim 18, wherein after the receiving, by the first AP, second indication information from the access controller AC, the method further comprises:
sending, by the first AP, a BA request frame to the first STA, wherein the BA request frame is used to request the first STA to adjust an SSN in a BA frame of the first STA, the BA request frame comprises a second SSN, and the second SSN is determined by the first AP based on an SN corresponding to at least one subframe to be sent by the first AP to the first STA; and
receiving, by the first AP, a second BA frame from the first STA, wherein the second BA frame comprises the second SSN.

22. The method according to claim 18, wherein after the receiving, by the first AP, second indication information from the access controller AC, the method further comprises:
sending, by the first AP, a downlink aggregated frame to the first STA, wherein the downlink aggregated frame comprises at least one subframe and a sequence number SN of each of the at least one subframe; and
receiving, by the first AP, a third BA frame from the first STA, wherein the third BA frame comprises a starting sequence number SSN field and a block acknowledgment bitmap field, the starting sequence number field is used to indicate a second SSN, the second SSN is determined by the first STA based on the SN of each of the at least one subframe, and the block acknowledgment bitmap field is used to indicate whether the first STA successfully receives the at least one subframe.

23. The method according to any one of claims 14 to 22, wherein the first AP and the AC are a same device, or the second AP and the AC are a same device.

24. A communication method, wherein the method comprises:
receiving, by an access controller AC, an aggregation parameter from a second access point AP, wherein the aggregation parameter is an aggregation parameter used to establish a first aggregated session between the second AP and a first station STA; and
sending, by the AC, the aggregation parameter to a first AP, wherein the aggregation parameter is used by the first AP to establish a second aggregated session with the first STA.

25. The method according to claim 24, wherein the receiving, by an AC, an aggregation parameter from a second AP comprises:
receiving, by the AC, an aggregation request frame and an aggregation response frame from the second AP, wherein the aggregation request frame and the aggregation response frame are used to establish the first aggregated session between the second AP and the first STA, and the aggregation parameter is carried in the aggregation request frame and the aggregation response frame; and
the sending, by the AC, the aggregation parameter to a first AP comprises:
sending, by the AC, the aggregation request frame and the aggregation response frame to the first AP; or
sending, by the AC to the first AP, the aggregation parameter carried in the aggregation request frame and the aggregation response frame.

26. The method according to claim 24 or 25, wherein after the sending, by the AC, the aggregation parameter to a first AP, the method further comprises:
receiving, by the AC, first indication information from the first AP, wherein the first indication information indicates that the second aggregated session between the first AP and the first STA is successfully established.

27. The method according to any one of claims 24 to 26, wherein the method further comprises:
sending, by the AC, second indication information to the first AP and the second AP, wherein the second indication information indicates that the first STA is to be handed over from the second AP to the first AP.

28. A communication apparatus, wherein the communication apparatus comprises a processor and a transceiver, the processor and the transceiver are connected to each other via a line, and the processor is configured to perform the method according to any one of claims 1 to 7, or configured to perform the method according to any one of claims 8 to 10, or configured to perform the method according to either of claims 11 and 12, or configured to perform the method according to any one of claims 13 to 23, or configured to perform the method according to any one of claims 24 to 27.

29. The communication apparatus according to claim 28, wherein the communication apparatus further comprises a memory.

30. A communication system, wherein the communication system comprises a first access point AP, an access controller AC, and a second AP, the first AP is configured to perform the method according to any one of claims 1 to 7, the AC is configured to perform the method according to any one of claims 8 to 10, and the second AP is configured to perform the method according to either of claims 11 and 12; or
the communication system comprises a first AP and an AC, the first AP is configured to perform the method according to any one of claims 13 to 23, and the AC is configured to perform the method according to any one of claims 24 to 27.

31. A computer-readable storage medium, wherein a computer program is stored in the computer-readable storage medium, and when the computer program is executed by a communication apparatus, the communication apparatus is enabled to perform the method according to any one of claims 1 to 7, or the communication apparatus is enabled to perform the method according to any one of claims 8 to 10, or the communication apparatus is enabled to perform the method according to either of claims 11 and 12, or the communication apparatus is enabled to perform the method according to any one of claims 13 to 23, or the communication apparatus is enabled to perform the method according to any one of claims 24 to 27.
